# EUROPÄISCHE PATENTSCHRIFT

(11) **EP 1 804 105 B1**
(45) Veröffentlichungstag und Bekanntmachung des Hinweises auf die Patenterteilung: **31.10.2018**
(21) Anmeldenummer: 07002111.8
(22) Anmeldetag: 03.02.2003
(51) Int. Cl.: G02B 21/22, G02B 27/22, H04N 13/00

(54) **Stereo-Untersuchungssystem und Stereo-Bilderezeugungsvorrichtung sowie Verfahren zum Betrieb einer solchen**
Stereoscopic examination system, stereoscopic image processing apparatus and operating method
Système d'inspection stéréoscopique, appareil de traitement d'images stéréoscopiques et procédé de mise en oeuvre

(30) Priorität: 04.02.2002 DE 10204431; 13.01.2003 DE 10300925
(43) Veröffentlichungstag der Anmeldung: 04.07.2007
(62) Teilanmeldung aus: 03002318.8
(73) Patentinhaber: Carl Zeiss Meditec AG, 07745 Jena (DE)
(72) Erfinder: Haisch, Michael, Dr., 73430 Aalen (DE); Hauger, Christoph, Dr., 73431 Aalen (DE)
(74) Vertreter: Diehl & Partner GbR

(56) Entgegenhaltungen:
- JP-A- 2000 075 213
- US-A- 5 067 804
- US-A- 5 552 929
- US-A- 5 898 518
- US-B1- 6 307 636
- PATENT ABSTRACTS OF JAPAN Bd. 2000, Nr. 21, 3. August 2001 (2001-08-03) -& JP 2001 117049 A (OLYMPUS OPTICAL CO LTD), 27. April 2001 (2001-04-27)

## Beschreibung

Die Erfindung betrifft ein Stereo-Untersuchungssystem zur Abbildung eines Objekts, eine Stereo-Bilderzeugungsvorrichtung zur Erzeugung wenigstens eines Paars von Bildern eines Objekts und ein Verfahren zur Erzeugung solcher Bilder.

Das erfindungsgemäße System und das Verfahren dienen dazu, stereoskopische Bilder bzw. Darstellungen eines Objekts derart zu erzeugen, dass beim Betrachten der Bilder ein räumlicher Eindruck von dem Objekt entsteht. Hierzu ist es notwendig, dass das linke und das rechte Auge des Betrachters verschiedene Bilder aus unterschiedlichen Blickrichtungen auf das Objekt wahrnehmen.

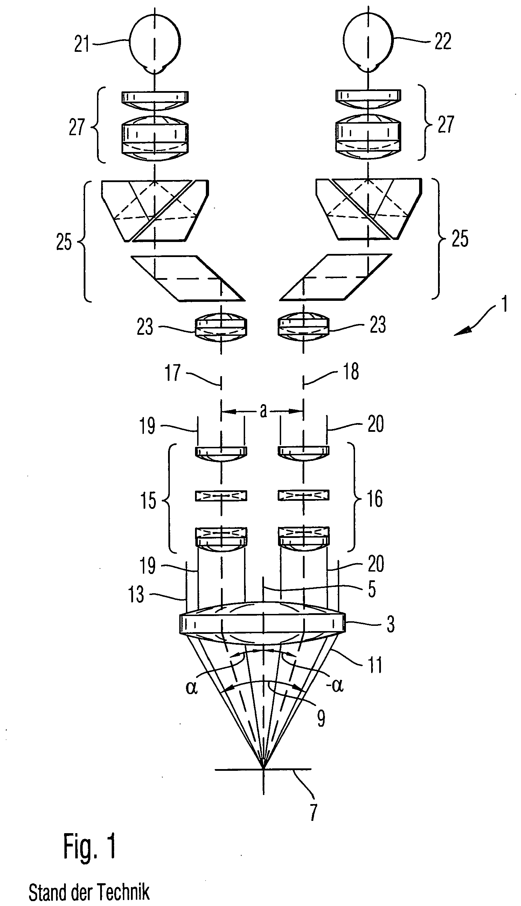

Ein Beispiel für ein herkömmliches Stereo-Untersuchungssystem ist ein Stereomikroskop. Ein Strahlengang eines herkömmlichen Stereomikroskops ist in Figur 1 schematisch dargestellt. Das dort gezeigte Stereomikroskop 1 umfaßt ein Objektiv 3 mit einer optischen Achse 5 und einer Objektebene 7, in welcher ein zu beobachtendes Objekt zur Anordnung kommt. Ein von dem Objekt bzw. der Objektebene 7 in einem Raumwinkelbereich 9 um die optische Achse 5 emittiertes Strahlenbündel 11 bildet das Objektiv 3 nach Unendlich ab und wandelt es damit in ein bildseitiges paralleles Strahlenbündel 13 um. In dem parallelen Strahlenbündel 13 sind zwei Zoomsysteme mit jeweils einer eigenen optischen Achse 17 bzw. 18 derart nebeneinander angeordnet, dass deren optische Achse 17 und 18 parallel versetzt zur optischen Achse 5 des Objektivs 3 und mit einem Abstand a voneinander angeordnet sind. Die beiden Zoomsyteme 15, 16 greifen aus dem parallelen bildseitigen Strahlenbündel 13 jeweils ein Teilstrahlenbündel 19 bzw.20 heraus, wobei das Teilstrahlenbündel 19 einem linken Auge 21 eines Benutzers und das andere Teilstrahlenbündel 20 einem rechten Auge 22 des Benutzers zugeführt wird. Hierzu sind in dem Strahlengang der Teilstrahlenbündel 19, 20 jeweils eine Feldlinse 23, ein Prismensystem 25 und ein Okular 27 angeordnet. Hierdurch erscheint dem linken Auge 21 das Objekt 7 unter einem Blickwinkel α bezüglich der optischen Achse 5, und dem rechten Auge 22 erscheint das Objekt unter einem Blickwinkel -α zur optischen Achse, wodurch bei dem Betrachter ein stereoskopischer räumlicher Eindruck des Objekts entsteht.

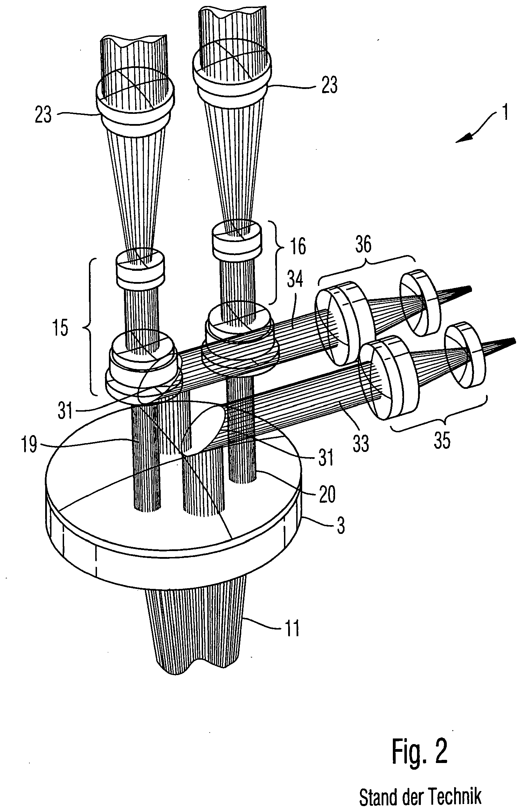

In Figur 2 ist ein Teil aus einem Strahlengang eines herkömmlichen Mikroskops 1 dargestellt, welches zwei Betrachtern jeweils ein stereoskopisches Bild eines Objekts bereitstellt. Ähnlich wie bei dem in Figur 1 gezeigten Mikroskop erzeugt ein Objektiv 3 aus einem von dem Objekt in einen Raumwinkelbereich emittierten Strahlenbündel 11 ein paralleles bildseitiges Strahlenbündel, aus dem zwei Zoomsysteme 15 und 16 jeweils ein Teilstrahlenbündel 19 bzw. 20 herausgreifen, die über Feldlinsen 23 und in Figur 2 nicht dargestellte Prismensysteme und Okulare den beiden Augen eines ersten Beobachters zugeführt werden.

In dem parallelen bildseitigen Strahlengang sind ferner zwei Spiegel 31 angeordnet, die aus dem parallelen Strahlengang zwei weitere Teilstrahlenbündel 33 und 34 herausgreifen und derart reflektieren, dass sie quer zur Strahlrichtung der Teilsltrahlenbündel 19 und 20 verlaufen. Diese beiden Teilstrahlenbündel 33 und 34 werden durch jeweils ein Zoomsystem 35 bzw. 36 und in Figur 2 nicht dargestellte Prismensysteme und Okulare den beiden Augen eines zweiten Beobachters zugeführt.

Die Verwendung dieses Mikroskops durch zwei Beobachter setzt voraus, dass sich die beiden Beobachter während der Betrachtung des Objekts ständig in einer festen räumlichen Position relativ zu dem Mikroskop befinden. Insbesondere chirurgischen Eingriffs eingesetzt wird, behindert diese räumliche Beschränkung die beiden Beobachter, welche als Operateure in dem Operationsfeld arbeiten müssen.

Es ist demgemäß eine Aufgabe der vorliegenden Erfindung, ein Stereo-Untersuchungssystem gemäss Anspruch 1 und eine Stereo-Bilderzeugungsvorrichtung mit diesem bereitzustellen, welche wenigstens einem Betrachter Freiheitsgrade hinsichtlich seiner Anordnung relativ zu dem beobachteten Objekt bieten.

Unter einem ersten Aspekt geht die Erfindung aus von einem Stereo-Untersuchungssystem zur Abbildung eines Objekts oder eines von einem Objekt erzeugten Zwischenbilds, welches eine Objektivanordnung mit einer optischen Achse und einer Objektebene zur Anordnung des abzubildenden Objekts bzw. Zwischenbilds aufweist. Die Objektivanordnung empfängt ein von dem Objekt bzw. Zwischenbild in einen Raumwinkelbereich emittiertes objektseitiges Strahlenbündel und führt es in ein bildseitiges Strahlenbündel über, aus dem eine Selektoranordnung wenigstens ein Paar von Teilstrahlenbündeln auswählt bzw. herausgreift, welche von einer Bildübertragungsvorrichtung empfangen werden, um aus einer in den Teilstrahlenbündeln enthaltenen Bildinformationen jeweils eine Darstellung zu erzeugen.

Das Stereo-Untersuchungssystem zeichnet sich dadurch aus, dass es eine Selektoranordnung umfasst, die dazu ausgebildet ist, einen Strahlquerschnitt wenigstens eines der beiden Teilstrahlenbündel relativ zu einem Strahlquerschnitt des bildseitigen Strahlenbündels zu verlagern, das heißt die Lage des Strahlquerschnitts des herausgegriffenen Teilstrahlenbündels innerhalb des Strahlquerschnitts des bildseitigen Strahlenbündels zu ändern.

Das Stereo-Untersuchungssystem umfaßt hierzu eine Steuerung, die die Selektoranordnung derart ansteuert, dass diese den Strahlquerschnitt des wenigstens einen Teilstrahlenbündels relativ zum Strahlquerschnitt des bildseitigen Strahlenbündels in Umfangsrichtung um die optische Achse verlagert. Es ist hierdurch möglich, die aus dem Stand der Technik bekannte feste Anordnung der herausgegriffenen Teilstrahlenbündel in Umfangsrichtung um die optische Achse des Objektivs aufzuheben und abzuändern, so dass dem Beobachter über die verlagerten Teilstrahlenbündel Darstellungen des Objekts zugeführt werden können, die aus variablen verschiedenen Beobachtungswinkeln entstehen. Es ist somit möglich, dass sich der Beobachter in Azimutalrichtung um das Objekt bewegen kann, und er bei entsprechender Ansteuerung der Selektoranordnung bei verschiedenen Azimutwinkeln bezüglich der optischen Achse stereoskopische Bilder des Objekts betrachten kann.

Vorzugsweise ist die Selektoranordnung dazu ausgebildet, wahlweise nur ein erstes oder ein zweites Teilstrahlenbündel des Paars von Teilstrahlenbündeln aus dem bildseitigen Strahlenbündel auszuwählen. Hierdurch können die einzelnen Teilstrahlenbündel zeitlich nacheinander durch die Bildübertragungsvorrichtung zur Darstellung gebracht werden, und es ist hierdurch besonders einfach möglich, die einzelnen Teilstrahlenbündel räumlich voneinander zu trennen. Dies ist insbesondere dann der Fall, wenn für mehrere Beobachter mehrere Paare von Teilstrahlenbündel aus dem bildseitigen Strahlquerschnitt herausgegriffen werden.

Eine solche Selektoranordnung ist vorzugsweise als schaltbare Blende ausgebildet, die wahlweise das erste oder das zweite Teilstrahlenbündel oder noch weitere Teilstrahlenbündel transmittiert.

Hierzu umfaßt die schaltbare Blende vorzugsweise eine Vielzahl von separat ansteuerbaren Blendenelementen, die jeweils von einem Licht stärker oder im wesentlichen vollständig transmittierenden Zustand in einen Licht weniger oder im wesentlichen nicht transmittierenden Zustand umschaltbar sind. Die Blendenelemente werden dann derart angesteuert, dass sie in dem Bereich des Strahlquerschnitts des bildseitigen Strahlenbündels, in dem das jeweilige Teilstrahlenbündel geformt werden soll, im Licht transmittierenden Zustand sind und in dem übrigen Bereich des bildseitigen Strahlenbündels in dem Licht nicht transmittierenden Zustand sind. Hiernach werden die Blendenelemente dann in einem anderen Bereich des bildseitigen Strahlquerschnitts in den Licht transmittierenden Zustand geschaltet, um dort das andere Teilstrahlenbündel zu formen.

Die umschaltbaren Blendenelemente können aus Flüssigkristallen oder mechanisch verlagerbaren Blendenelementen gebildet sein.

Alternativ zu der Ausbildung der Selektoranordnung als schaltbare Blende kann diese auch als in dem Strahlquerschnitt des bildseitigen Strahlenbündels angeordneter schaltbarer Spiegel ausgebildet sein, der wahlweise das erste oder das zweite Teilstrahlenbündel oder weitere Teilstrahlenbündel reflektiert. Es werden dann die Teilstrahlenbündel durch Reflexion in reflektierenden Bereichen des schaltbaren Spiegels gebildet. Hierzu umfaßt der Spiegel vorzugsweise separat ansteuerbare Spiegelelemente, die von einem das Licht des bildseitigen Strahlenbündels hin zur Bildübertragungsvorrichtung reflektierenden Zustand umschaltbar sind in einen entsprechend nicht oder weniger reflektierenden Zustand.

Vorzugsweise umfassen die Spiegelelemente Flüssigkristalle oder mechanisch verlagerbare Spiegelelemente.

Die von der Selektoranordnung nacheinander aus dem bildseitigen Strahlenbündel herausgegriffenen mehreren Teilstrahlenbündel werden vorzugsweise einer gemeinsamen Kamera zugeführt, die von der Steuerung derart angesteuert wird, dass diese zeitlich nacheinander Darstellungen der Bildinformation erzeugt, die in den einzelnen Teilstrahlenbündeln enthalten ist.

Es ist hierbei insbesondere mit einer Kamera möglich, Stereobildpaare für mehrere Beobachter zu erzeugen, die sich an verschiedenen Orten in Umfangsrichtung um die optische Achse des Objektivs befinden.

Alternativ ist auch vorgesehen, dass zur Erzeugung eines jeden stereoskopischen Bildpaars ein Paar von Kameras vorgesehen ist, wobei eine jede Kamera einem eigenen Teilstrahlenbündel zugeordnet ist. Es können dann Darstellungen der in den beiden Teilstrahlenbündeln enthaltenen Bildinformation zeitgleich gewonnen werden.

Hierbei ist vorgesehen, dass die beiden Kameras gemeinsam mit den beiden Teilstrahlenbündeln verlagerbar sind, wozu die Kameras bezüglich einer Drehachse drehfest miteinander verbunden, um diese jedoch gemeinsam verdrehbar angeordnet sind.

Alternativ ist hierzu jedoch auch vorgesehen, dass die beiden Kameras relativ zu der Objektivanordnung fest angeordnet sind und die Selektoranordnung eine um eine Drehachse verdrehbare Optik umfaßt, um den beiden fest angeordneten Kameras die beiden um die optische Achse verlagerbaren Teilstrahlenbündel zuzuführen.

Hierbei ist die verdrehbare Optik vorzugsweise eine bilddrehende Optik, so dass die beiden Kameras die jeweiligen Darstellungen mit richtiger Bildorientierung unmittelbar erzeugen können.

Die verdrehbare Optik umfaßt vorzugsweise ein Dove-Prisma oder ein Schmidt-Pechan-Prisma.

Ist das Unterschungssystem für die Verwendung durch mehrere Betrachter vorgesehen, so umfaßt es vorzugsweise eine Strahlteileranordnung, um das bildseitige Strahlenbündel aufzuteilen und mehreren Selektoranordnungen zuzuführen. Einer jeden Selektoranordnung ist dann eine separate Bildübertragungsvorrichtung zugeordnet, welche die stereoskopischen Darstellungen für jeweils einen Beobachter erzeugt.

Beim Einsatz einer Strahlteileranordnung bildet diese eine einfache Möglichkeit, das Objekt zu beleuchten, in dem ein Beleuchtungslichtstrahl über die Strahlteileranordnung in den Strahlengang derart eingekoppelt wird, dass er das Objektiv durchsetzt und von diesem zum Objekt hin fokussiert wird.

Es ist auch vorgesehen, dass die Bildübertragungsvorrichtung wenigstens drei Kameras umfaßt, welche in fester räumlicher Beziehung relativ zueinander jeweils einen Teil des bildseitigen Strahlenbündels zugeführt bekommen und jeweils eine Darstellung der in den ihnen zugeführten Teilstrahlenbündeln enthaltenen Bildinformation erzeugen. Die Selektoranordnung wählt dann ein Paar von Kameras aus den wenigstens drei Kameras aus, um deren Darstellungen zu einer stereoskopischen Darstellung zusammenzuführen. Durch Auswahl jeweils verschiedener Kamerapaare werden dann Teilstrahlenbündel mit jeweils verschiedener Position um die optische Achse des Objektivs zur Erzeugung der Darstellungen ausgewählt.

Das Objektiv ist vorzugsweise so ausgebildet, dass es das bildseitige Strahlenbündel im wesentlichen nach Unendlich abbildet und damit zu einem im wesentlichen parallelen Strahlenbündel formt. Allerdings kann das Objektiv auch nach Endlich abbilden und ein konvergentes bildseitiges Strahlenbündel formen, in dem die Selektoranordnung angeordnet ist.

Vorzugsweise wählt die Selektoranordnung die Teilstrahlenbündel an einer Stelle des bildseitigen Strahlengangs aus, an der eine Fourier-Ebene angeordnet ist.

Die Bildübertragung umfaßt vorzugsweise eine Anzeigevorrichtung zur Darstellung der in den beiden Teilstrahlenbündel enthaltenen Bildinformation derart, dass die Bildinformation eines ersten Teilstrahlenbündels des Paars Teilstrahlenbündel für das linke Auge des Betrachters sichtbar ist und entsprechend die Darstellung des in dem anderen zweiten Teilstrahlenbündels des Paars enthaltene Bildinformation für das rechte Auge des Betrachters sichtbar ist. Die Bildübertragungsvorrichtung kann einen für eine stereoskopische Bildbetrachtung geeigneten Bildschirm umfassen. Dies kann beispielsweise ein Bildschirm sein, der die beiden Darstellungen zeitlich nacheinander dem Betrachter darbietet, wobei dieser eine mit der zeitlichen Abfolge synchronisierte Verschlußbrille trägt, die abwechselnd dem linken Auge und dem rechten Auge den Blick auf dem Bildschirm freigibt. Es kann auch einem jeden Auge des Betrachters eine separate Bildübertragungsvorrichtung zugeordnet sein, welche insbesondere direkt am Kopf des Betrachters vor dem Auge getragen wird.

Sofern für eine korrekte Stereo-Darstellung nötig, werden durch die Anzeigevorrichtung die Darstellungen für das linke und das rechte Auge in ihrer Bildebene jeweils um einen Bilddrehwinkel derart gedreht erzeugt, daß der Bilddrehwinkel mit zunehmender Verlagerung der Teilstrahlenbündel in Umfangsrichtung um die optische Achse zunimmt.

Vorzugsweise umfaßt das Untersuchungssystem dann eine Positionserfassungseinrichtung, um eine Azimutposition des Betrachters relativ zu der Objektivanordnung zu erfassen, wobei die Steuerung dann die erfaßte Azimutposition einsetzt, um die Verlagerung der Querschnitte der beiden Teilstrahlenbündel relativ zu dem Strahlquerschnitt des bildseitigen Strahlenbündels in Umfangsrichtung um die optische Achse einzustellen. Das Untersuchungssystem kann dann dem Betrachter stereoskopische Darstellungen aus einer Perspektive liefern, die der Perspektive entspricht, mit der der Betrachter direkt, d.h. ohne Verwendung der Objektivanordnung auf das Objekt blicken würde.

Im folgenden werden Ausführungsformen der Erfindung anhand der Zeichnungen näher erläutert. Hierbei zeigt:
- Figur 1: einen Strahlengang eines herkömmlichen Stereomikroskops;
- Figur 2: einen Teil eines Strahlengangs eines weiteren herkömmlichen Stereomikroskops für zwei Beobachter,
- Figur 3: eine Ausführungsform eines erfindungsgemäßen Stereo-Untersuchungssystems mit mehreren verdrehbaren Kameras,
- Figur 4: eine schematische Darstellung einer weiteren Ausführungsform eines erfindungsgemäßen Stereo-Untersuchungssystems mit mehreren verdrehbaren Kameras in einer Ansicht von der Seite,
- Figur 5: eine Draufsicht auf das in Figur 4 dargestellte Stereo-Untersuchungssystem,
- Figur 6: eine Ausführungsform eines erfindungsgemäßen Stereo-Untersuchungssystems mit feststehenden Kameras und verdrehbarer Optik,
- Figur 7: eine weitere Ausführungsform eines erfindungsgemäßen Stereo-Untersuchungssystems mit verdrehbaren Kameras,
- Figur 8: eine weitere Ausführungsform eines erfindungsgemäßen Stereo-Untersuchungsystems mit feststehenden Kameras und verdrehbaren Optiken,
- Figur 9: noch eine weitere Ausführungsform eines erfindungsgemäßen Stereo-Untersuchungsystems mit feststehenden Kameras und verdrehbaren Optiken,
- Figur 10: noch eine weitere Ausführungsform eines erfindungsgemäßen Stereo-Untersuchungsystems mit feststehenden Kameras und verdrehbaren Optiken,
- Figur 11: eine Ausführungsform eines erfindungsgemäßen Stereo-Untersuchungssystems mit einer Bildübertragungsvorrichtung mit acht Kameras in schematischer Draufsicht,
- Figur 12: eine Ausführungsform eines erfindungsgemäßen Stereo-Untersuchungsystems mit einer schaltbaren Blende,
- Figuren 13 bis 16: Varianten der in Figur 13 gezeigten schaltbaren Blende,
- Figur 17: eine Ausführungsform eines erfindungsgemäßen Stereo-Untersuchungssystems mit einer schaltbaren Spiegelanordnung,
- Figur 18: eine schematische Darstellung des erfindungsgemäßenStereo-Untersuchungssystems zusammen mit einem Benutzer,
- Figur 19: eine Draufsicht auf eine Stereobasis des in Figur 18 gezeigten Untersuchungssystems,
- Figur 20: eine in dem Stereo-Untersuchungssystem der Figur 18 einsetzbare Positionserfassungsvorrichtung,
- Figur 21: eine weitere Ausführungsform eines erfindungsgemäßen Stereo-Untersuchungssystems,
- Figur 22: ein Beleuchtungssystem zur Verwendung mit einem in den Figuren 1 bis 19 gezeigten Stereo-Untersuchungssystem,
- Figur 23: eine Querschnittsdarstellung zur Erläuterung der Funktion des in Figur 22 gezeigten Beleuchtungssystems, und
- Figuren 24 bis 30: weitere Ausführungsformen eines erfindungsgemäßen Stereo-Untersuchungssystems.

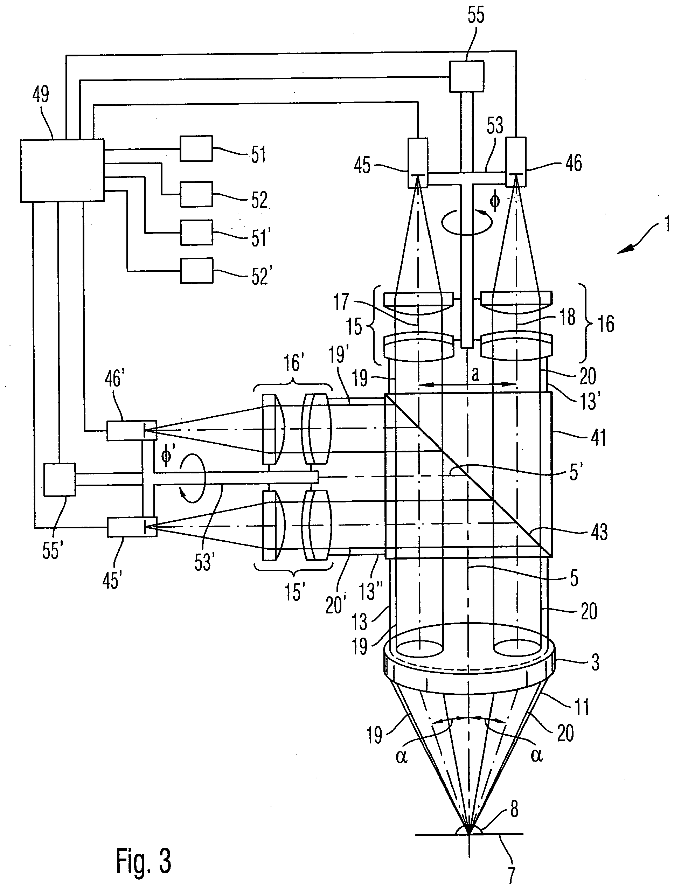

Eine Ausführungsform eines erfindungsgemäßen Stereo-Untersuchungssystems ist in Figur 3 schematisch dargestellt. Das Stereo-Untersuchungssystem 1 umfaßt ein Objektiv 3 mit einer optischen Achse 5 und einer Objektebene 7. In der Objektebene 7 ist ein Objekt 8 anordenbar. Von dem Objekt 8 bzw. der Objektebene 7 geht ein in einen Raumwinkelbereich 9 emittiertes objektseitiges Strahlenbündel 11 aus, welches von dem Objektiv 3 aufgenommen und nach Unendlich abgebildet bzw. in ein paralleles bildseitiges Strahlenbündel 13 überführt wird, wobei die optische Achse 5 in einer Mitte eines Strahlquerschnitts des bildseitigen Strahlenbündels 13 angeordnet ist.

Im Strahlengang nach dem Objektiv 3 ist ein Strahlteiler 41 mit einer unter 45° zur optischen Achse 5 angeordneten halbdurchlässigen Spiegelfläche 43 angeordnet. Durch den Strahlteiler 41 wird das bildseitige parallele Strahlenbündel in zwei Teile 13' und 13" aufgeteilt, wobei der Strahlteil 13' den Strahlteiler 41 geradlinig durchsetzt und der Strahlteil 13" unter 90° zur optischen Achse 5 aus dem Strahlteiler 41 austritt.

Im Strahlengang des bildseitigen Strahlenbündels 13' sind nach dem Strahlteiler 41 zwei Zoomsysteme 15 und 16 angeordnet, welche jeweils eine optische Achse 17 bzw. 18 aufweisen. Die optischen Achsen 17 und 18 der Zoomsysteme 15 und 16 sind parallel zur optischen Achse 5 orientiert. Die Zoomsysteme 15 und 16 sind ferner bezüglich der optischen Achse 5 des Objektivs 3 symmetrisch angeordnet und weisen einen Abstand a voneinander auf. Aufgrund der geometrischen Abmessungen der Eintrittslinsen der Zoomsysteme 15, 16 tritt in diese nur ein Teil der durch das bildseitige Strahlenbündel 13' bereitgestellten Strahlung ein. Diese in die Zoomsysteme 15 und 16 eintretenden Teilstrahlenbündel 19 bzw. 20 werden durch die Zoomsysteme 15 und 16 Kameras 45 und 46 zugeführt, welche beispielsweise CCD-Kameras sind. Dabei ist die Kamera 45 fest dem Zoomsystem 15 zugeordnet, und die Kamera 46 ist fest dem Zoomsystem 16 zugeordnet.

Eine Verlängerung der in die Zoomsysteme 15 und 16 eintretenden Teilstrahlenbündel 19, 20 zurück zum Objekt 8 macht deutlich, dass die Kamera 46 ein Bild des Objekts 8 empfängt, wie es bei Betrachtung des Objekts 8 unter einem Blickwinkel α bezüglich der optischen Achse 5 des Objektivs erscheint. Entsprechend empfängt die Kamera 45 ein Bild des Objekts 8, wie es bei Betrachtung des Objekts 8 unter einem ebenfalls zur optischen Achse 5 um einen Winkel α geneigten Blickwinkel erscheint. Hierbei unterscheiden sich allerdings die Blickwinkel der beiden von den Kameras 45, 46 erzeugten Bilder um einen Wert von 2 α. Die von den Kameras 45, 46 aufgenommenen Bilder werden von einer Steuerung 49 digital ausgelesen und entweder gespeichert oder direkt an zwei Anzeigen 51 und 52 ausgegeben, wobei die Anzeige 51 das von der Kamera 45 empfangene Bild darstellt und die Anzeige 52 das von der Kamera 46 empfangene Bild darstellt. Die Anzeigen 51, 52 können die Anzeigen eines am Kopf eines Benutzers getragenen Sichtgeräts sein, so dass die Anzeige 51 von dem linken Auge des Benutzers und die Anzeige 52 von dem rechten Auge des Benutzers betrachtet wird. Damit erhält das linke Auge ein Bild des Objekts 8, wie es bei Betrachtung des Objekts 8 um einen Winkel α geneigt zur optischen Achse 5 entsteht, und das rechte Auge des Benutzers erhält ein Bild des Objekts 8, wie es bei Betrachtung des Objekts 8 unter einem hierzu entgegengesetzten Blickwinkel α entsteht. Da den beiden Augen des Benutzers somit Bilder des gleichen Objekts, allerdings bei Betrachtung aus unterschiedlichen Blickwinkeln zugeführt werden, sind die beiden Bilder ein Stereo-Bildpaar, d.h. ein solches Paar von Bildern, welches bei dem Benutzer einen stereoskopischen Raumeindruck des Objekts 8 hervorruft.

Die beiden Kameras 45, 46 und die beiden Zoomsysteme 15, 16 sind fest an einer gemeinsamen Halterung 53 montiert, welche um die optische Achse 5 drehbar ist (vgl. Winkel φ in Figur 3). Zum Antrieb der Halterung 53 zusammen mit den Zoomsystemen 15 und 16 und Kameras 45, 46 ist ein von der Steuerung 49 angesteuerter Motor 55 vorgesehen. Durch Betätigen des Motors 55 werden die Zoomsysteme 15, 16 und Kameras 45, 46 um die optische Achse 5 des Objektivs 3 verdreht. Dies führt dazu, dass sich auch die den Kameras 45, 46 zugeführten Teilstrahlenbündel 19, 20 relativ zu dem Strahlquerschnitt des parallelen bildseitigen Strahlenbündels 13' verlagern. Hierdurch ändern sich auch die Blickrichtungen auf das Objekt 8 der auf den Anzeigen 51 und 52 dargestellten Bilder des Objekts 8. Zwar bleibt der Winkel zwischen den auf die Kameras 45, 46 abgebildeten Teilstrahlenbündeln von 2α erhalten, es haben sich aber die den Kameras 45, 46 zugeführten Teilstrahlenbündel in azimutale Richtung (siehe Winkel φ in Figur 3), um die optische Achse 5 herum verlagert, d.h. eine Stereobasis für die stereoskopische Betrachtung des Objekts hat sich im Vergleich zu der in Figur 3 dargestellten Situation um die optische Achse 5 verdreht.

Vorzugsweise sind die Vergrößerungen der Zoomsysteme 15, 16 einander gleich.

Damit können durch das Stereo-Untersuchungssystem 1 einem Benutzer desselben stereoskopische Bildpaare dargestellt werden, wie sie bei Betrachtung des Objekts 8 entstehen, wobei ein Umfangswinkel φ bzw. Azimut der Stereobasis durch die Steuerung 49 frei einstellbar ist. Verfahren zur Einstellung des Azimuts durch die Steuerung 49 werden nachfolgend erläutert.

Der entlang einer gespiegelten optischen Achse 5' unter 90° zur optischen Achse 5 des Objektivs 3 verlaufende Strahlteil 13" des bildseitigen Strahlenbündels trifft auf zwei parallel zu der gespiegelten optischen Achse 5' angeordnete Zoomsysteme 15' und 16', welche aus dem Strahlenbündel 13" zwei Teilstrahlenbündel 19' und 20' herausgreifen und zwei Kameras 45' und 46' zuführen. Die durch die Kameras 45', 46' aufgenommenen Bilder werden ebenfalls von der Steuerung 49 ausgelesen und auf Anzeigen 51' und 52' dargestellt, wobei die eine Anzeige 51' der Kamera 45' zugeordnet ist und die andere Anzeige 52' der Kamera 46 zugeordnet ist.

Die beiden Anzeigen 51' und 52' sind zur Betrachtung durch einen weiteren Benutzer vorgesehen, der von dem die Anzeigen 51 und 52 betrachtenden Benutzer verschieden ist.

Auch die Kameras 45' und 46' sind an einer Halterung 53' zusammen mit den Zoomsystemen 15' und 16' montiert und um die gespiegelte optische Achse 5' drehbar. Hierzu ist ein durch die Steuerung 49 angesteuerter Motor 55' vorgesehen. Somit kann die Steuerung 49 auch den Azimut für die Stereobasis einstellen, mit der der weitere Benutzer das Objekt 8 betrachtet. Insbesondere sind die Azimute der Stereobasen der beiden Benutzer unabhängig voneinander einstellbar.

Vorzugsweise ist die Vergrößerung der Zoomsysteme 15' und 16' unabhängig von der Vergrößerung der Zoomsysteme 15 und 16 einstellbar.

Im folgenden werden Varianten des in Figur 3 dargestellten Stereo-Untersuchungssystems beschrieben. Hinsichtlich ihres Aufbaus und ihrer Funktion einander entsprechende Komponenten sind mit den Bezugszahlen der Figuren 1 bis 3 bezeichnet, zu ihrer Unterscheidung jedoch mit einem zusätzlichen Buchstaben versehen. Zur Erläuterung wird auf die gesamte vorangehende Beschreibung Bezug genommen.

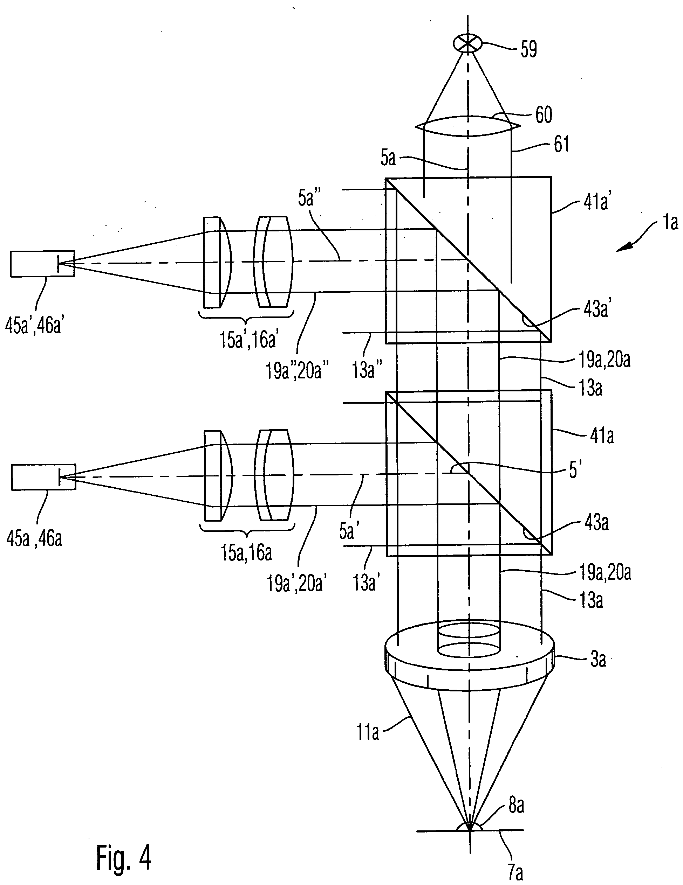

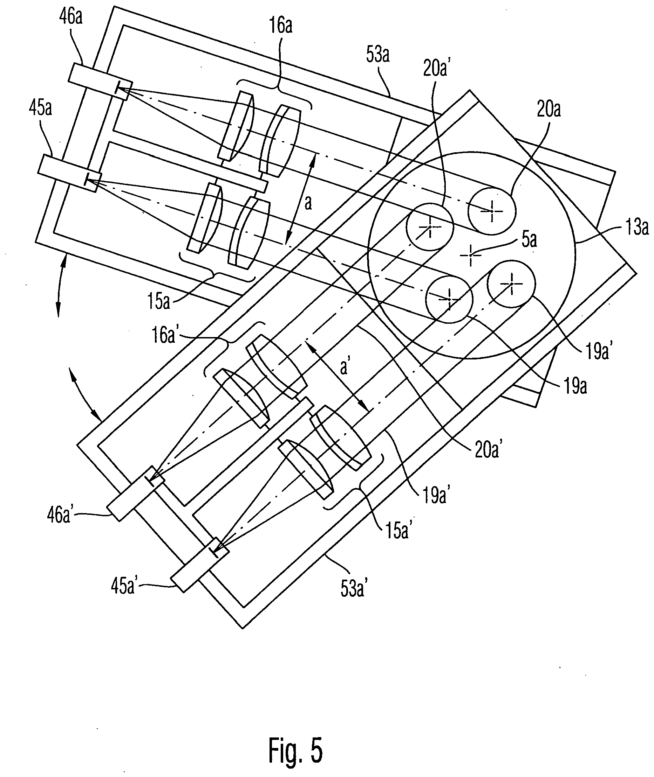

In Figur 4 ist ein weiteres Stereo-Untersuchungssystem 1a in Seitenansicht und in Figur 5 in Draufsicht dargestellt.

Das Stereo-Untersuchungssystem 1a umfaßt wiederum ein Objektiv 3a mit einer optischen Achse 5a und einer Objektebene 7a zur Anordnung eines Objekts 8a. Ein von dem Objekt 8a ausgehendes Strahlenbündel 11a wird von dem Objektiv 3a in ein paralleles bildseitiges Strahlenbündel 20a überführt, welches in einen ersten Strahlteiler 41a eintritt und an einem unter 45° zur optischen Achse 5a angeordneten halbreflektierenden Spiegel 43a aufgeteilt wird in einen Strahlteil 13a', welcher sich entlang einer unter 90° zur optischen Achse 5a des Objektivs 3a angeordneten gespiegelten optischen Achse 5a' erstreckt, und einen den ersten Strahlteiler 41a geradlinig durchsetzenden Strahlteil 13a". Der den ersten Strahlteiler durchsetzende Strahlteil 13a" tritt in einen zweiten Strahlteiler 41a' ein und wird an einem unter 45° zur optischen Achse 5a angeordneten teilreflektierenden Spiegel 43a' um 90° reflektiert, so dass er sich als gespiegelter Strahlteil 13a" entlang einer gespiegelten optischen Achse 5a" erstreckt.

Das Untersuchungssystem 1a umfaßt ferner eine auf der optischen Achse 5a des Objektivs 3a angeordnete Lampe, deren emittiertes Licht mittels eines Kollimators 60 zu einem parallelen Strahlenbündel 61 geformt wird, welches nacheinander den zweiten Strahlteiler 41a' und den ersten Strahlteiler 41a und sodann das Objektiv 3a durchsetzt, um von diesem in einen konvergenten Strahl zur Beleuchtung des Objekts 8a geformt zu werden.

Der Strahlteiler 41a (41a') ist mit einer Halterung 53a (53a') fest verbunden, welche um die optische Achse 5a des Objektivs 3a drehbar gelagert ist und zu deren Antrieb um die optische Achse 5a ein in den Figuren 4 und 5 nicht dargestellter Motor vorgesehen ist. Die Halterung 53a (53a') trägt ferner ein Paar Zoomsysteme 15a, 16a (15a', 16a') und ein Paar Kameras 45a, 46a (45a', 46a'), welche jeweils symmetrisch zu der gespiegelten optischen Achse 5a' (5a") angeordnet sind.

Die Zoomsysteme 15a, 16a (15a', 16a') übertragen Teilstrahlenbündel 19a, 20a, (19a', 20a') auf die Kameras 45a, 46a (45a', 46a'), welche in der Draufsicht der Figur 5 mit Abstand zu der gespiegelten optischen Achse 5a' (5a") nebeneinander angeordnet sind.

Die Zoomsysteme 15a, 16a, 15a', 16a' greifen somit aus den parallelen Strahlenbündeln 13a', 13a" Teilstrahlenbündel 19a, 20a, 19a', 20a' heraus, deren Anordnung im Strahlquerschnitt des parallelen Strahlenbündels 13a besonders in der Draufsicht der Figur 5 ersichtlich ist. Die Teilstrahlenbündel 19a, 20a bzw. 19a', 20a' bilden die Stereobasis für die durch die Kameras 45a, 46a bzw. 45a', 46a' erzeugten stereoskopischen Darstellungen des Objekts zur Betrachtung durch einen ersten bzw. zweiten Benutzer. Durch Verdrehen der Halterungen 53a und 53a' um die optische Achse 5a kann die Stereobasis für einen jeden Benutzer um die optische Achse 5a verdreht werden, so dass ein jeder Benutzer das Objekt mit verschiedenen und individuell einstellbaren Azimuten seiner Stereobasis betrachten kann.

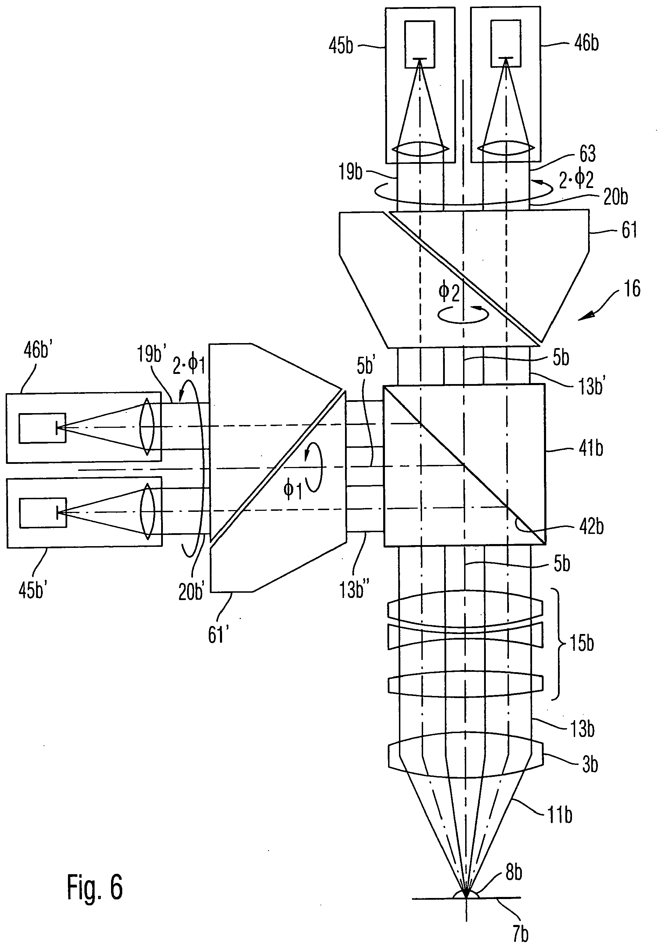

Ein in Figur 6 dargestelltes Stereo-Untersuchungssystem 1b umfaßt ein Objektiv 3b, welches ein von einem Objekt 8b ausgehendes divergentes Strahlenbündel 11b in ein paralleles bildseitiges Strahlenbündel 13b umformt. In dem parallelen Strahlenbündel 13b ist ein Zoomsystem 15b angeordnet. Nach einem Durchgang durch das Zoomsystem 15b tritt das parallele Strahlenbündel 13b in einen Strahlteiler 41b ein, welcher einen halbdurchlässigen Spiegel 42b aufweist, um das parallele Strahlenbündel 13b in ein sich entlang einer optischen Achse 5b des Objektivs 3b weiter fortsetzendes paralleles Strahlenbündel 13b' und ein sich unter 90° zu der optischen Achse 5b des Objektivs 3b sich erstreckendes paralleles Strahlenbündel 13b" aufzuteilen.

Das entlang der optischen Achse 5b des Objektivs 3b sich fortsetzende parallele Strahlenbündel 13b' tritt in eine als Schmidt-Pechan-Prisma 61 ausgeführte bilddrehende Optik ein und als wiederum paralleles Strahlenbündel 63 aus. Im Strahlengang hinter der bilddrehenden Optik 61 ist in dem parallelen Strahlenbündel 63 ein Paar von Kameras 45b, 46b nebeneinander angeordnet, welche aus dem Strahlenbündel 63 jeweils ein Teilstrahlenbündel 19b bzw. 20b herausgreifen.

Die beiden Kameras 45b und 46b und der Strahlteiler 41b sind bezüglich des Objektivs 3b fest angeordnet. Allerdings ist die bilddrehende Optik 61 um die optische Achse 5b drehbar angeordnet. Dies führt dazu, dass das aus der bilddrehenden Optik 61 austretende Strahlenbündel 63 bei einer Drehung der Optik 61 um einen Winkel φ um die optische Achse 5b relativ zu dem in die bilddrehende Optik 61 eintretenden parallelen Strahlenbündel 13b' um einen Winkel 2 x φ um die optische Achse 5b verdreht ist. Damit kann durch Drehung der bilddrehenden Optik 61 um die optische Achse 5b, welche Drehung mittels eines in Figur 6 nicht dargestellten Motors über die ebenfalls nicht dargestellte Steuerung des Untersuchungssystems 1b angetrieben wird, ein Azimut der Stereobasis der durch die Kameras 45b, 46b erzeugten stereoskopischen Darstellungen um die optische Achse 5b gedreht werden.

Ein dem System aus bilddrehender Optik 61 und Kameras 45b, 46b entsprechendes System aus bilddrehender Optik 61' und Kameras 45b' und 46b' ist entlang der gespiegelten optischen Achse 5b' angeordnet und dient zur Erzeugung von stereoskopischen Darstellungen des Objekts 8b für einen zweiten Benutzer. Auch für diesen Benutzer kann ein Azimut der Stereobasis zur Betrachtung des Objekts 8b durch Betätigen eines in der Figur nicht dargestellten Antriebs zur Drehung der bilddrehenden Optik 61' um die Achse 5b' verändert werden.

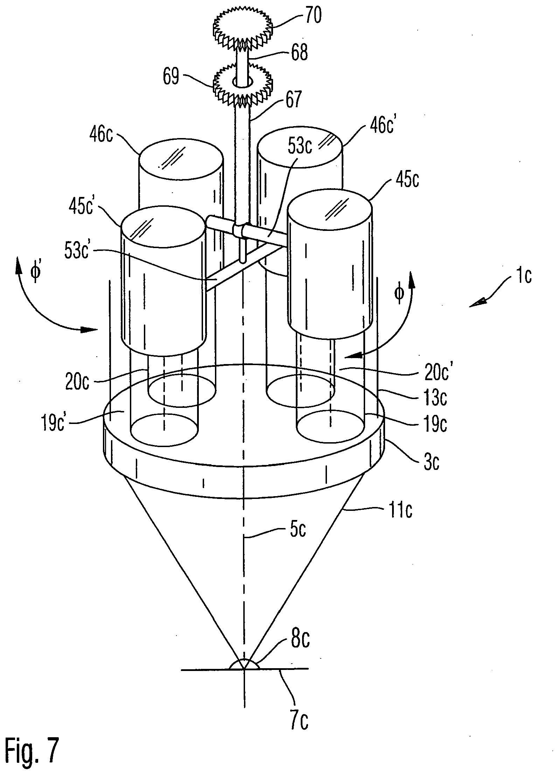

Ein in Figur 7 perspektivisch dargestelltes Stereo-Untersuchungssystem 1c umfaßt wiederum ein Objektiv 3c, welches ein von einem Objekt 8c ausgehendes divergentes Strahlenbündel 11c in ein paralleles Strahlenbündel 13c umformt. In dem parallelen Strahlenbündel 13c sind vier Kameras 45c, 46c, 45c' und 46c' angeordnet, wobei eine jede der vier Kameras ein anderes Teilstrahlenbündel 19c, 20c, 19c' und 20c' herausgreift. Die von den Kameras 45c und 46c erzeugten Darstellungen des Objekts 8c werden über eine in Figur 7 nicht dargestellte Steuerung den Augen eines ersten Benutzers zugeführt, und die von dem Kamerapaar 45c' und 46c' erzeugten Bilder werden für die Augen eines weiteren Benutzers dargestellt.

Das Kamerapaar 45c, 46c ist mittels einer Stange 53c fest miteinander verbunden, und das Kamerapaar 45c', 46c' ist mittels einer weiteren Stange 53c' ebenfalls fest miteinander verbunden. Die beiden Kameras 45c, 46c sind an einer an die Stange 53c angreifenden Hülse 67 getragen, während die Kameras 45c' und 46c' an einer die Hülse 67 durchsetzenden Stange 68 getragen sind, die an die Stange 53c angreift. Sowohl die Hülse 67 als auch die Stange 68 sind um eine optische Achse 5c des Objektivs 3c drehbar gelagert, wobei zu deren Antrieb an der Hülse 67 bzw. der Stange 68 Zahnräder 69 bzw. 70 vorgesehen sind. Die Zahnräder 69 und 70 stehen in Eingriff mit einem in Figur 7 nicht dargestellten Antrieb, um die Kamerapaare 45c, 46c bzw. 45c', 46c' in Azimutrichtung um die optische Achse 5c zu verdrehen. Dabei sind die Kamerapaare unabhängig voneinander um die optische Achse 5c verdrehbar, wobei allerdings die Verdrehwinkel nicht völlig frei sind sondern vielmehr dadurch beschränkt sind, dass die Kameras in Anlage aneinander geraten.

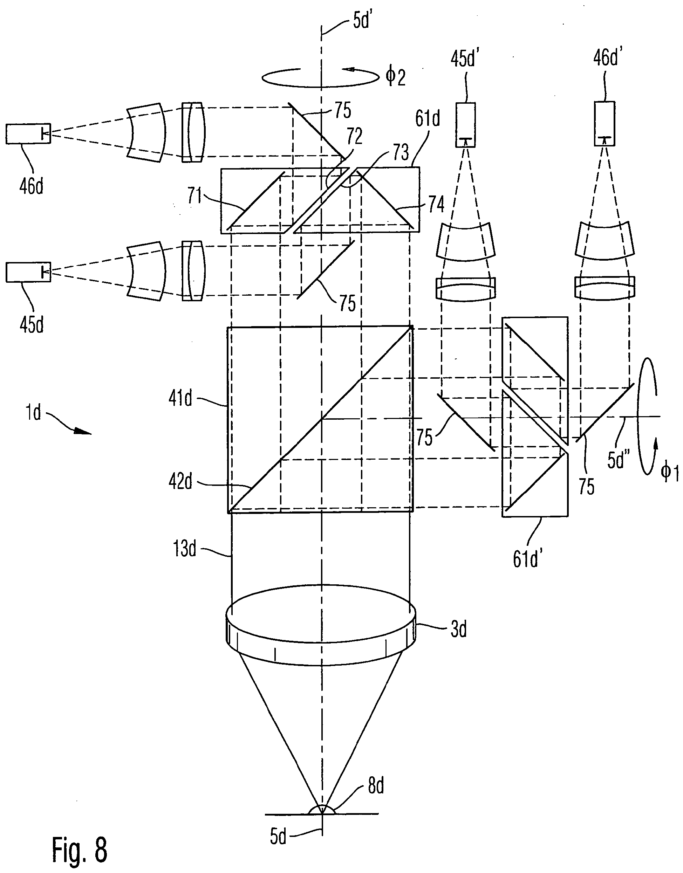

Ein in Figur 8 dargestelltes Stereo-Untersuchungssystem 1d zur Erzeugung von stereoskopischen Bildpaaren für zwei Beobachter ist ähnlich aufgebaugt wie das in Figur 6 dargestellte Untersuchungssystem. Es umfaßt ebenffalls zwei Kamerapaare aus Kameras 45d, 46d bzw. 45d', 46d', welche bezüglich eines Objektivs 3d fest angeordnet sind. Zwischen einem Strahlteiler 41d und den Kamerapaaren ist jeweils eine bilddrehende Optik 61d bzw. 61d' angeordnet. Im Unterschied zu der in Figur 6 gezeigten Ausführungsform ist die bilddrehende Optik 61d, 61d' nicht als Schmidt-Pechan-Prisma ausgebildet, sondern umfaßt eine Mehrzahl von Spiegelflächen 71, 72, 73 und 74, welche relativ zueinander fest und um optische Achsen 5d' bzw. 5d" drehbar angeordnet sind. Ferner ist noch einer jeden Kamera ein feststehender Spiegel 75 zugeordnet, der das von dem Spiegelsystem 61d erzeugte Teilstrahlenbündel in die jeweilige Kamera einkoppelt. Die von den Kamerapaaren erzeugten Bildpaare sind wiederum Stereobildpaare, die das Objekt 8d einem jeweiligen Betrachter stereoskopisch darstellen. Durch Betätigen eines in Figur 8 nicht dargestellten Antriebs der Spiegelsysteme 61d, 61d' sind hierbei die Azimute von Stereobasen für die jeweiligen Betrachter um die optische Achse 5d drehbar.

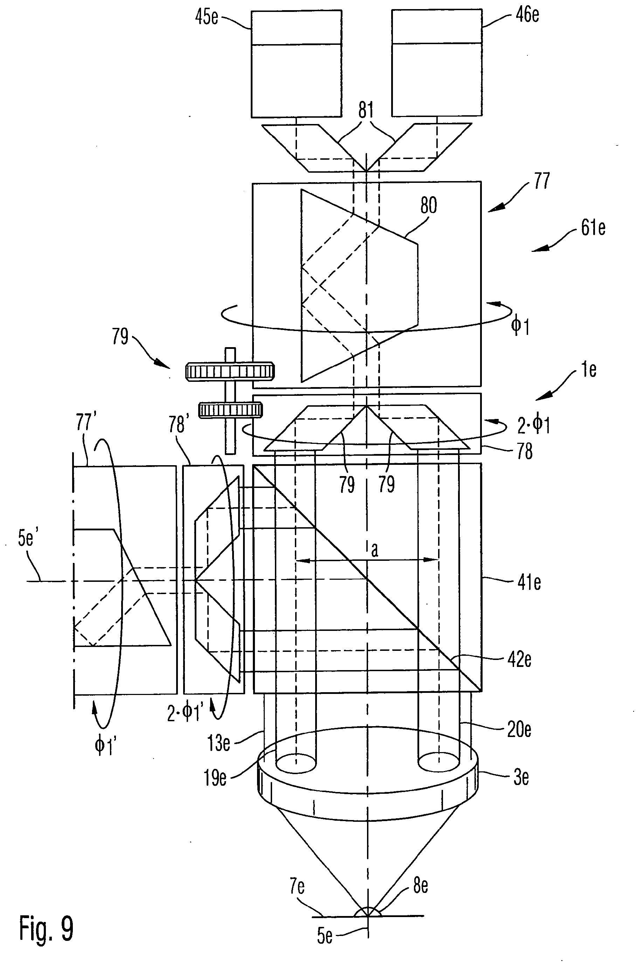

Ein in Figur 9 schematisch dargestelltes Stereo-Untersuchungssystem 1e dient wiederum zur Erzeugung von Stereobildpaaren für zwei Beobachter. Das Untersuchungssystem 1e ist dem in Figur 6 dargestellten Untersuchungssystem weitgehend ähnlich, unterscheidet von diesem jedoch hinsichtlich des Aufbaus einer bilddrehenden Optik 61e. Diese umfaßt zwei relativ zueinander und um eine optische Achse 5e drehbare Prismensysteme 77 und 78. Die beiden Prismensysteme 77 und 78 werden zur Drehung um die optische Achse 5e durch ein Getriebe 79 angetrieben, und zwar derart, dass sich das Prismensystem 78 um einen Winkel von 2 x φ dreht, während sich das Prismensystem 77 um einen Winkel φ dreht. Das Prismensystem 78 ist zwischen einem Strahlteiler 41e und dem Prismensystem 77 angeordnet. Es umfaßt zwei Prismen 79, um zwei aus einem von einem Objektiv 3e erzeugten parallelen Strahlenbündel 13e herausgegriffene Teilstrahlenbündel 19e und 20e, welche voneinander einen relativ großen Abstand a von der optischen Achse 5a aufweisen, näher an die optische Achse 5a heranzuführen. Nach Durchlaufen des Prismensystems 78 treten die Teilstrahlenbündel 19e, 20e in das Prismensystem 77 ein, welches eine bilddrehendes Dove-Prisma 80 umfaßt. Da die Teilstrahlenbündel 19e, 20e hierbei vergleichsweise nahe an der optischen Achse verlaufen, kann das Dove-Prisma 80 vergleichsweise klein ausgeführt sein. Nach Durchlaufen des Prismensystems 77 werden die Teilstrahlenbündel 19e, 20e jeweils einer Kamara 45e bzw. 46e über Doppelreflexionsprismen 81 zugeführt.

Die durch die Kameras 45e und 46e gewonnenen Bilder werden Anzeigen für ein linkes bzw. ein rechtes Auge eines ersten Benutzers zugeführt.

Einem zweiten Benutzer werden Bilder von Kameras 45e' und 46e' zugeführt, welche Bilder von Teilstrahlenbündel 19e' und 20e' über eine Optik erzeugen, welche entlang der an dem Strahlteiler 41e gespiegelten optischen Achse 5e' angeordnet ist. Die Komponenten 77', 78', 79', 80' und 81' gleichen den entsprechenden Komponenten der entlang der optischen Achse 5e angeordneten Optik.

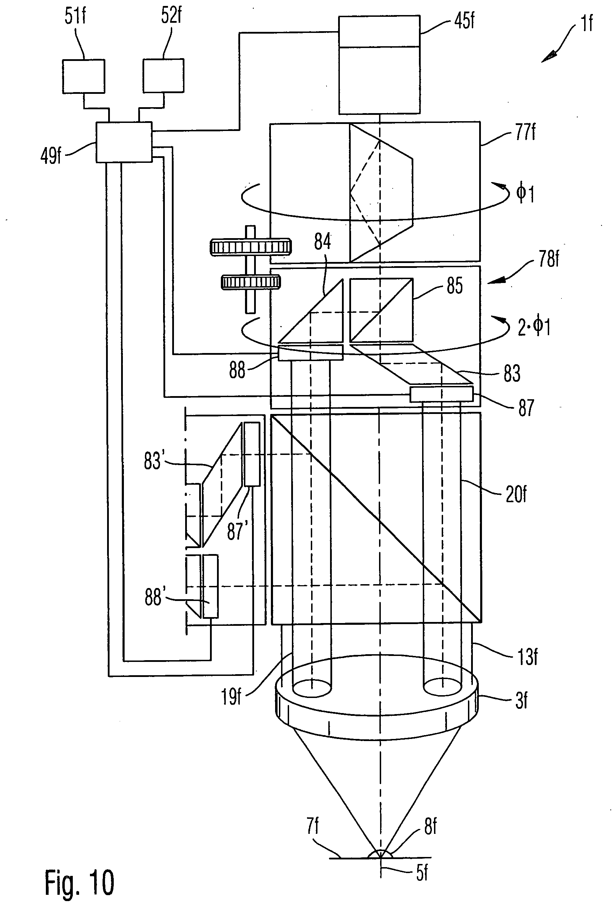

Ein in Figur 10 schematisch dargestelltes Stereo-Untersuchungssystem 1f dient wiederum der Erzeugung von Stereobildpaaren für zwei Betrachter. Das Untersuchungssystem 1f ist ähnlich aufgebaut wie das in Figur 9 dargestellte Untersuchungssystem, wobei es ebenfalls zwei Prismensysteme 77f und 78f umfaßt, die über ein Getriebe 79f derart um eine optische Achse 5f antreibbar sind, dass sich das Prismensystem 77f mit einer doppelt so großen Verdrehgeschwindigkeit um die optische Achse dreht wie das Prismensystem 78f. Hierbei greift das Prismensystem 78f wiederum zwei Teilstrahlenbündel 19f und 20f aus einem von einem Objektiv 3f erzeugten parallelen Strahlenbündel 13f heraus. Allerdings ist das Prismensystem 78f dazu ausgebildet, mittels Umlenkprismen 83 und 84 sowie eines Strahlkopplers 85 die beiden Teilstrahlenbündel 19f und 20f in Überlagerung entlang einer optischen Achse 5f zu bringen. Im Unterschied zu der in Figur 9 dargestellten Ausführungsform weist das Untersuchungssystem 1f lediglich eine einzige Kamera 45f auf, welche ebenfalls auf der optischen Achse 5f angeordnet ist, um Darstellungen der in den beiden Teilstrahlenbündeln 19f, 20f enthaltenen Bildinformation zu erzeugen. Um die beiden Darstellungen voneinander zu separieren, umfaßt das Prismensystem 78f einen im Strahlengang des Teilstrahlenbündels 20f angeordneten schaltbaren Verschluß 87 sowie einen weiteren in dem Strahlengang des Teilstrahlenbündels 19f angeordneten schaltbaren Verschluß 88. Die Verschlüsse 87 und 88 sind Flüssigkristallverschlüsse, welche von einer Steuerung 49f von einem Licht transmittierenden Zustand in einen Licht im wesentlichen nicht transmittieren Zustand umschaltbar sind. Die Steuerung 49f schaltet zunächst den Verschluß 87 in den Licht nicht transmittierenden Zustand und den Verschluß 88 in den Licht transmittierenden Zustand, so dass das Teilstrahlenbündel 19f auf die Kamera 45f geführt wird. Das durch die Kamera 45f hierbei erzeugte Bild des Objekts 8f liest die Steuerung 49f aus der Kamera 45f aus und stellt es auf einer Anzeige 51f zur Betrachtung für das linke Auge eines ersten Beobachters dar. Nachfolgend schaltet die Steuerung 49f den Verschluß 88 in den Licht nicht transmittierenden Zustand und entsprechend den Verschluß 87 in den Licht transmittieren Zustand. Hierdurch wird das andere Teilstrahlenbündel 20f der Kamera zugeführt, und das hierbei von der Kamera 45f aufgenommene Bild wird von der Steuerung 49f ausgelesen und auf einer weiteren Anzeige 52f für das rechte Auge des Benutzers dargestellt. Sodann wird dieser Vorgang wiederholt, so dass die Kamera 45f zeitlich alternierend die in den Teilstrahlenbündeln 19f und 20f enthaltene Bildinformation des Objekts 8f aufnimmt und auf den Anzeigen 51f und 52f für das linke bzw. rechte Auge des Benutzers darstellt. Durch die zeitlich alternierende Schaltung der Teilstrahlenbündel 19f und 20f ist es damit möglich, deren Bildinformation mit lediglich einer Kamera zu erhalten.

Für einen zweiten Beobachter ist eine entsprechende Optik vorgesehen, welche entlang einer an dem Strahlteiler 41f gespiegelten optischen Achse angeordnet ist und den gleichen Aufbau aufweist, wie die entlang der den Strahlteiler 41f durchsetzenden optischen Achse angeordnete Optik. Der Übersichtlichkeit halber ist diese Optik für den zweiten Beobachter in Figur 10 nicht mehr vollständig im Detail dargestellt.

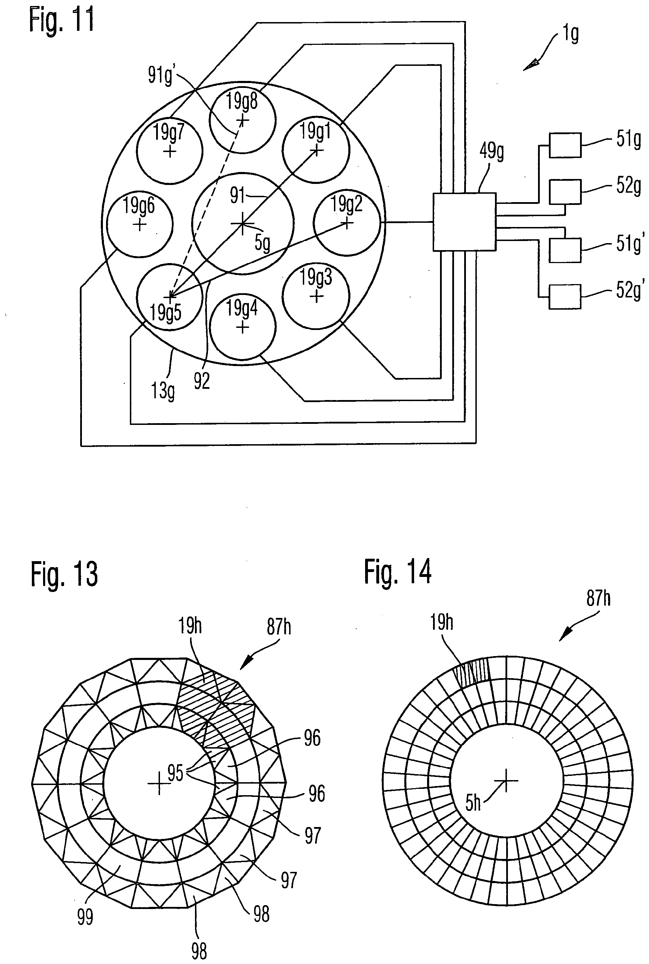

In Figur 11 ist ein Teil eines Stereo-Untersuchungssystems 1g in Draufsicht dargestellt. Das in Figur 11 dargestellte Untersuchungssystem 1g ähnelt dem in Figur 7 dargestellten Untersuchungssystem, indem es mehr als drei, nämlich acht Kameras aufweist, die mit jeweils gleichem Abstand von einer optischen Achse 5g angeordnet sind, wobei die acht Kameras in Umfangsrichtung um die optische Achse 5g mit jeweils gleichem Abstand voneinander fest angeordnet sind. Eine jede der Kameras greift aus einem bildseitigen parallelen Strahlenbündel 13g jeweils ein Teilstrahlenbündel 19g1, ..., 19g8 heraus, um ein Bild der in den jeweiligen Teilstrahlenbündeln 19g1, ..., 19g8 enthaltenen Bildinformation eines Objekts zu erzeugen und an eine Steuerung 49g auszulesen.

An die Steuerung 49g ist ein Anzeigenpaar zur Bereitstellung einer stereoskopischen Anzeige für einen ersten Betrachter angeschlossen, welche zwei Anzeigevorrichtungen 51g und 52g umfaßt. Entsprechend sind für einen zweiten Betrachter zwei Anzeigevorrichtungen 51g' und 52g' an die Steuerung 49g angeschlossen. Die Steuerung 49g und die Kameras wirken zusammen als Selektoranordnung, indem die Steuerung 49g unter den acht Kameras ein erstes Kamerapaar auswählt, um diese ausgewählten Kameras den Anzeigen 51g, 52g für den ersten Benutzer zuzuordnen und die durch dieses Kamerapaar aufgenommenen Bilder auf den entsprechenden Anzeigen, ggf. nach einer Bilddrehung, darzustellen. Die Steuerung 49g wählt ein zweites Kamerapaar aus, um diese den Anzeigen 51g' und 52g' für den zweiten Benutzer zuzuordnen und die durch dieses Kamerapaar aufgenommenen Bilder auf den entsprechenden Anzeigen, ggf. nach einer Bilddrehung, darzustellen.

In der in Figur 11 dargestellten Situation hat die Steuerung 49g die das Teilstrahlenbündel 19g1 aufnehmende Kamera der Anzeige 52g und damit dem rechten Auge des ersten Benutzers zugeordnet, die das Teilstrahlenbündel 19g2 aufnehmende Kamera ist der Anzeige 51g' und damit dem linken Auge des zweiten Benutzers zugeordnet, und die das Teilstrahlenbündel 19g5 aufnehmende Kamera ist den Anzeigen 51g und 52g' und damit sowohl dem linken Auge des ersten Benutzers und dem rechten Auge des zweiten Benutzers zugeordnet. Damit erhält der erste Benutzer von dem betrachteten Objekt eine stereoskopische Darstellung mit einer Stereobasis, die in Figur 2 durch eine Strecke 91 symbolisiert ist, während der zweite Beobachter von dem Objekt eine stereoskopische Darstellung mit einer Stereobasis erhält, die in Figur 11 mit einer Strecke 92 symbolisiert ist. Die beiden Strecken bzw. Stereobasen 91 und 92 sind mit unterschiedlichen Azimutwinkeln um die optische Achse 5g angeordnet. Diese Azimutwinkel der Stereobasen 91, 92 sind durch die Steuerung 49g änderbar. Beispielsweise kann die Stereobasis für den ersten Beobachter um die optische Achse 5g gegen den Uhrzeigersinn gedreht werden, indem die Steuerung anstatt der das Teilstrahlenbündel 19g1 aufnehmende Kamera die das Teilstrahlenbündel 19g8 aufnehmende Kamera zur Zuordnung zu der mit dem rechten Auge des ersten Benutzers betrachteten Anzeige 52g auswählt, so dass sich dann für diesen Benutzer eine Stereobasis 91g' ergibt, die in Figur 11 als gestrichelte Strecke eingezeichnet ist.

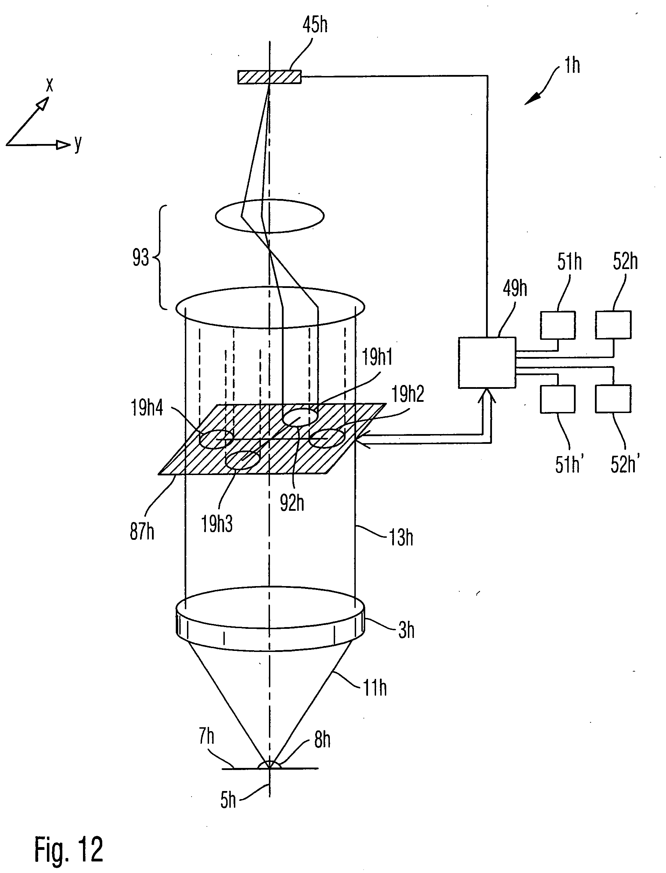

In Figur 12 ist ein weiteres Stereo-Untersuchungssystem 1h schematisch dargestellt. Dieses dient wiederum dazu, stereoskopische Bildpaare eines Objekts 8h an Anzeigen 51h und 52h einem linken bzw. rechten Auge eines ersten Betrachters und an Anzeigen 51h' und 52h' einem linken bzw. rechten Auge eines zweiten Betrachters darzustellen. Hierzu umfaßt das Untersuchungssystem 1h ferner ein Objektiv 3h zur Erzeugung eines parallelen bildseitigen Strahlenbündels 13h aus einem von dem Objekt 8h ausgehenden divergenten Strahlenbündel 11h und eine Abbildungsoptik 93 zur Übertragung des parallelen Strahlenbündels 13h auf einen CCD-Kamerachip 45h, so dass auf diesem ein scharfes Bild des Objekts 8h erzeugt wird.

Im Strahlengang des parallelen Strahlenbündels 13h ist in einer Ebene, die einer Fourier-Ebene des Objektivs 3h bezüglich dessen Objektebene 7h entspricht, eine schaltbare Blende 87h angeordnet. Die Blende 87h ist eine Flüssigkristall-Blende mit einer Vielzahl von Flüssigkristallelementen (Pixeln), welche durch die Steuerung 49h von einem Licht transmittierenden Zustand in einen Licht weniger transmittierenden Zustand umschaltbar sind. Die Steuerung 49h hat in der Ebene der Blende 87h Bereiche 19h1, 19h2, 19h3 und 19h4 ausgewählt, die Teilstrahlenbündeln entsprechen, deren Bildinformation auf den Anzeigen 51h bis 52h' für die Betrachter dargestellt werden. Hierbei ist der Bereich 19h1 der Anzeige 52h und damit dem rechten Auge des ersten Benutzers zugeordnet, der Bereich 19h3 ist der Anzeige 51h und damit dem linken Auge des ersten Benutzers zugeordnet, der Bereich 19h2 ist der Anzeige 51h' und damit dem linken Auge des zweiten Benutzers zugeordnet, während der Bereich 19h4 der Anzeige 52h' und damit dem rechten Auge des zweiten Benutzers zugeordnet ist.

Die Kamera 45h nimmt die in den einzelnen Teilstrahlenbündeln enthaltene Bildinformation zur Darstellung auf den Anzeigen 51h bis 52h' zeitlich sequentiell auf. Hierzu sind die Blendenelemente bzw. Pixel der LCD-Blende 87h, welche außerhalb der genannten Bereiche 19h1 bis 19h4 liegen ständig in ihren Licht weniger transmittierenden Zustand geschaltet. Von den in den Bereichen 19h1 bis 19h4 angeordneten Pixeln sind in dem in Figur 12 gezeigten Zustand lediglich die in dem Bereich 19h1 angeordneten Pixel in ihren Licht stark transmittierenden Zustand geschaltet, während die Pixel der anderen Bereiche 19h2, 19h3 und 19h4 in ihren Licht wenig transmittierenden Zustand geschaltet sind. Entsprechend nimmt die Kamera in diesem Schaltzustand die in dem den Querschnitt des Bereichs 19a durchsetzenden Teilstrahl enthaltene Bildinformation auf. Die Steuerung 49h liest diese Bildinformation aus der Kamera 45h aus und stellt sie auf der Anzeige 52h für das rechte Auge des ersten Benutzers dar.

Nachfolgend werden die in dem Bereich 19h1 enthaltenen Pixel in den Licht weniger transmittierenden Zustand geschaltet, während die in dem Bereich 19h3 enthaltenen Pixel in den Licht stark transmittierenden Zustand geschaltet werden. Damit wird der Querschnitt des Bereichs 19h3 für die Transmission des entsprechenden Teilstrahlenbündels freigegeben, und die Kamera 45h nimmt die in diesem Teilstrahlenbündel enthaltene Bildinformation auf, welche die Steuerung 49h ausliest und auf der Anzeige 51h für das linke Auge des ersten Betrachters darstellt.

Nachfolgend werden die in dem Bereich 19h3 enthaltenen Pixel der LCD-Blende 87h in ihren Licht weniger transmittierenden Zustand geschaltet. Sodann wird ein entsprechender Vorgang für die Bereiche 19h2 und 19h4 durchgeführt, d.h. es wird zunächst eine Aufnahme des den Querschnitt des Bereichs 19h2 durchsetzenden Teilstrahls durch die Kamera 45h gewonnen und auf der Anzeige 51h' dargestellt, und sodann wird eine entsprechende Aufnahme des den Bereichs 19h4 durchsetzenden Teilstrahlenbündels gewonnen und auf der Anzeige 52h' für das rechte Auge des zweiten Betrachters dargestellt.

Somit erhält der erste Betrachter eine stereoskopische Darstellung des Objekts 8h mit einer Stereobasis, die in Figur 12 durch eine Strecke 91h symbolisiert ist, während der zweite Betrachter eine stereoskopische Darstellung mit einer durch eine Strecke 92h symbolisierten Stereobasis erhält.

Hierbei werden von der Steuerung 49h die von der Kamera 45h aufgenommenen Bilder vor ihrer Zuführung zu den Anzeigen 51h und 52h bzw. 51h' und 52h' derart in ihrer Bildebene gedreht, daß dem Betrachter die Bilder in ihrer korrekten Orientierung dargestellt werden. Dies ist insbesondere dann der Fall, wenn eine Richtung der Stereobasen 19h1 und 19h2 in den dargestellten Bildern eine Horizontalrichtung ist.

Durch den Einsatz der schaltbaren Blende 87h als Selektor für die Auswahl der einzelnen abzubildenden Teilstrahlenbündel ergeben sich besondere Freiheitsgrade für die Einstellung der Stereobasen 91h, 92h für die einzelnen Benutzer. Die Stereobasen können nicht nur azimutal um eine optische Achse 5h verlagert werden, indem die Steuerung 49h in Umfangsrichtung um die Achse 5h versetzt zu den Bereichen 19h1 bis 19h4 angeordnete Bereiche auswählt, um diese zeitlich nacheinander in ihren lichttransmittierenden Zustand zu schalten, was dazu führt, dass die Stereobasen 91h, 92h um die optische Achse 5h verdreht werden. Es ist vielmehr auch möglich, die Länge der Stereobasis zu ändern, indem der Abstand zwischen den Bereichen 19h1 und 19h3 bzw. 19h2 und 19h4 verringert wird. Ferner ist es auch möglich, die Stereobasen 91h und 92h parallel zu versetzen. Dies führt dazu, dass der jeweilige Betrachter das Objekt 8h zwar unter einem gleichen Azimut jedoch mit einer anderen Elevation wahrnimmt.

Die einzeln ansteuerbaren Flüssigkristall-Schaltelemente der Blende 87h können in einem Feld periodisch in zwei zueinander orthogonalen Richtungen (X,Y) angeordnet sein.

Eine Variante hierzu ist in Figur 13 schematisch dargestellt. Hier umfaßt eine schaltbare Blende 87h eine Vielzahl von Flüssigkristallelementen, welche einzeln schaltbar sind. Diese Elemente umfassen dreieckige Elemente 95, 96, 97 und 98 sowie teilkreisringförmige Elemente 99. Die Elemente 95, 96, 97, 98 und 99 sind derart zusammengesetzt, dass sie zusammen eine kreisringförmige schaltbare Blende bilden. Um die Blende zum Durchtritt eines Teilstrahlenbündels 19h zu öffnen, werden mehrere der Elemente durch die Steuerung in ihren Licht stark transmittierenden Zustand versetzt, wie dies in Figur 13 durch die schraffiert dargestellten Elemente illustriert ist, während sämtliche übrigen Elemente in ihren Licht wenig transmittierten Zustand geschaltet sind.

Eine weitere Variante für eine schaltbare Blende 87h ist in Figur 14 dargestellt. Auch diese schaltbare Blende 87h weist kreisringförmige Gestalt auf, wobei die schaltbaren Elemente jeweils viereckige Gestalt aufweisen und in drei Kreisringen in Umfangsrichtung um die optische Achse 5h verteilt angeordnet sind. In Figur 14 sind zwei schaltbare Elemente schraffiert dargestellt, was andeuten soll, dass sie in ihren Licht stark transmittierten Zustand geschaltet sind, um den Durchtritt für ein Teilstrahlenbündel 19h freizugeben, während alle übrigen schaltbaren Elemente in ihren Licht wenig transmittierten Zustand geschaltet sind.

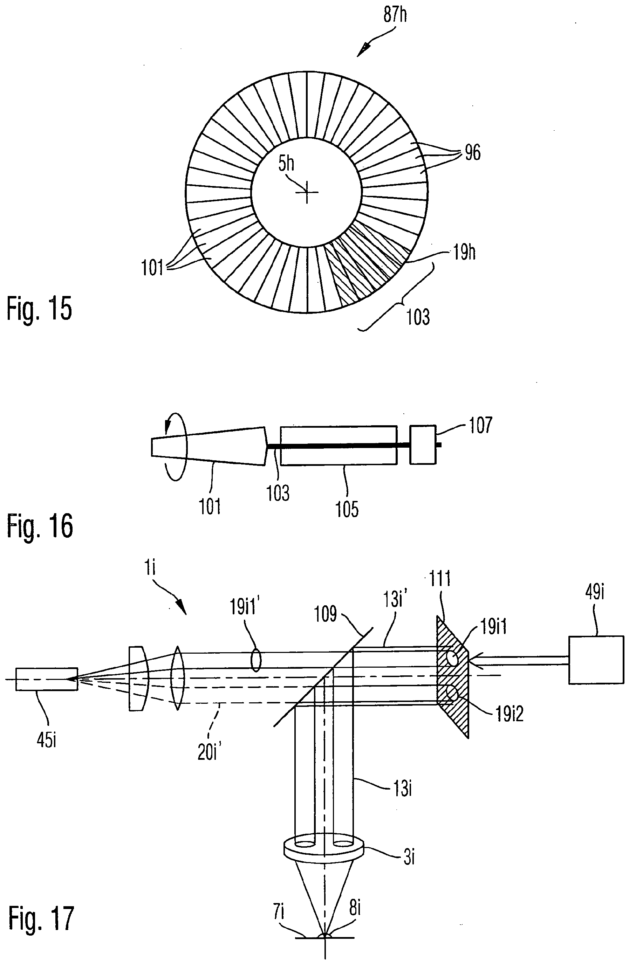

Eine weitere Variante für eine schaltbare Blende 87h ist in den Figuren 15 und 16 erläutert. Die in Figur 15 in Draufsicht dargestellte Blende 87h weist eine Vielzahl von mechanisch zwischen einem Licht transmittierenden und einem Licht nicht transmittierenden Zustand umschaltbaren Schaltelementen 96 auf. Ein jedes Schaltelement 96 umfaßt eine sektorförmige Lamelle 101, die um eine Drehachse 103 verdrehbar an einem Lager 105 gehaltert ist und mittels eines von der Steuerung 49h angetriebenen Stellantriebs 107 zur Drehung um die Achse 103 angetrieben wird. Die Vielzahl von Lamellen 101 ist in Umfangsrichtung um die optische Achse 5h angeordnet, wobei die Drehachse 103 einer jeden Lamelle 101 radial zur optischen Achse 5h orientiert ist, wie dies in Figur 15 dargestellt ist. Die Antriebe 107 der Lamellen 101 können deren Orientierung um die Achse 103 von einer ersten Stellung, in der die Lamellen 101 flach in der Papierebene der Figur 15 angeordnet sind, in eine zweite Stellung ändern, in der die Lamellen 101 senkrecht zur Papierebene der Figur 15 orientiert sind. In der ersten Stellung blockieren die Lamellen den Lichtdurchtritt im wesentlichen, und in der zweiten Stellung geben sie den Lichtdurchtritt im wesentlichen frei. In Figur 15 ist in Umfangsrichtung ein Bereich 103 schraffiert dargestellt, in dem sich die Lamellen 101 in ihrer das Licht transmittierenden zweiten Stellung befinden, während sich alle übrigen Lamellen 101 in ihrer ersten, den Durchtritt des Lichts blockierenden Stellung befinden. Entsprechend ist in dem Bereich 103 der Durchtritt für ein Teilstrahlenbündel 19h frei. Die Steuerung kann somit in Umfangsrichtung verschiedene Bereiche für den Durchtritt eines Teilstrahlenbündels festlegen und diese Bereiche zeitlich nacheinander in den lichttransmittierenden Zustand schalten, so dass die Kamera 45h die in diesem Teilstrahlenbündel enthaltene Bildinformation aufnehmen kann.

Das in Figur 12 dargestellte Stereo-Untersuchungssystem umfaßt zur Selektion der auf die Kamera abgebildeten Teilstrahlenbündel eine schaltbare transmittierende Vorrichtung, nämlich die schaltbare Flüssigkeitskristallblende. Es ist jedoch auch möglich, ein ähnliches System mit einer schaltbaren reflektierenden Vorrichtung aufzubauen, wie dies in Figur 17 erläutert ist. In dem dort schematisch dargestellten Stereo-Untersuchungssystem 1i wird ein bildseitiges paralleles Strahlenbündel 13i an einem polarisierenden Strahlteiler 109 um 90° abgelenkt und fällt als polarisiertes paralleles Strahlenbündel 3i' auf einen schaltbaren Spiegel 111. Der schaltbare Spiegel 111 umfaßt eine Vielzahl von einzelnen schaltbaren Spiegelelementen, die als Flüssigkristallelemente ausgebildet sind. In einem ersten Schaltzustand reflektieren die Flüssigkristallelemente die auftreffende Strahlung des Strahlenbündels 3i' mit einer Polarisation derart, dass die reflektierte Strahlung den polarisierenden Strahlteiler 109 durchsetzt, während sie in einem zweiten Schaltzustand die Strahlung mit einer anderen Polarisation reflektieren, so dass die reflektierte Strahlung den polarisierenden Strahlteiler 109 nicht durchsetzt.

Eine Schaltung 49i hat in dem in Figur 17 gezeigten Zustand zwei Bereiche 19i1 und 19i2 des Spiegels 111 festgelegt, welche alternierend von dem ersten Schaltzustand in den zweiten Schaltzustand versetzt werden. Alle übrigen Bereiche des Spiegels 111 bleiben permanent in dem zweiten Schaltzustand. In Figur 17 ist eine Situation dargestellt, in dem der Bereich 19i1 in den Zustand geschaltet ist, in dem die in diesem Bereich reflektierte Strahlung den polarisierenden Strahlteiler 109 als Teilstrahlenbündel 19i1' durchsetzt und eine Kamera 45i belichtet.

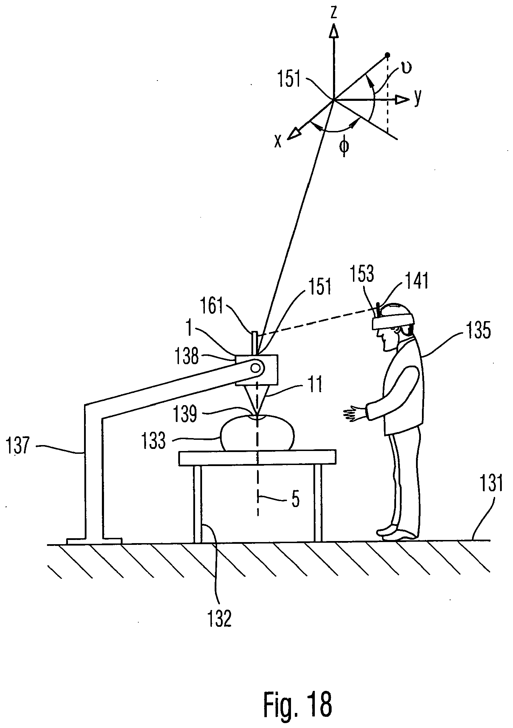

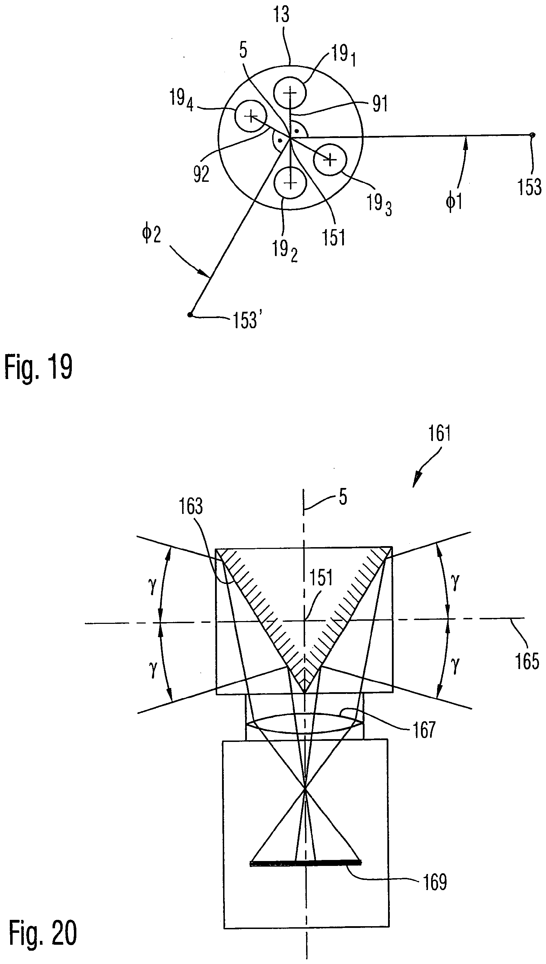

Ein Verfahren zur Einstellung einer Stereobasis des Stereo-Untersuchungssystems wird nachfolgend anhand der Figur 18 und 19 näher erläutert.

Figur 18 zeigt einen Operationssaal, auf dessen Boden 131 ein Operationstisch 132 angeordnet ist, auf dem ein Patient 133 liegt, an dem ein Operateur 135 einen mikrochirurgischen Eingriff vornimmt. Hierbei ist an einem am Boden 131 des Operationssaal festgemachten Stativ 137 ein Mikroskop 138 derart angebracht, dass es Bilder eines Operationsfelds 139 aufnimmt und diese für den Operateur 135 sichtbar darstellt. Der Operateur 135 trägt hierzu an seinem Kopf eine Anzeigevorrichtung 141, mit zwei Anzeigen 51, 52, die zusammen dem linken und rechten Auge des Operateurs stereoskopische Bilder darstellen. Die darzustellenden Bilder werden als Daten drahtlos von dem an dem Stativ gehalterten Mikroskop 138 zu der Anzeigevorrichtung 141 übertragen. An einem vorbestimmten Fixpunkt 151 des Mikroskops 138 ist ein Ursprung eines Polarkoordinatensystems festgelegt. Ferner ist an der Anzeigevorrichtung 141 des Operateurs ein Referenzpunkt 153 festgelegt, dessen relative Position zu dem Fixpunkt 151 durch eine in der Nähe des Fixpunktes 151 an dem Mikroskop 138 festgemachte und in Figur 20 im Detail dargestellte Positionserfassungsvorrichtung 161 des Untersuchungssystems als ein Azimut φ und eine Elevation υ bestimmt werden.

Eine Anordnung einer Stereobasis 91 für die dem Operateur 135 bereitgestellten Stereobilder ist in Figur 19 in Draufsicht auf die XY-Ebene des Operationssaales dargestellt. Der Fixpunkt 151 an dem Mikroskop 138 ist so gewählt, dass er in Draufsicht auf die XY-Ebene mit der optischen Achse 5 des Mikroskops 138 zusammenfällt. Die als Strecke 91 dargestellte Stereobasis für den Operateur 135 ist dabei azimutal so ausgerichtet, dass eine Verbindungslinie zwischen dem Referenzpunkt 153 des Operateurs 135 und dem Fixpunkt 151 sich orthogonal zu der Strecke 91 erstreckt. Wenn sich der Operateur 135 im Operationssaal bewegt und dabei seine Position ϕ₁ relativ zu dem Fixpunkt 151 in Umfangsrichtung um die optische Achse 5 ändert, stellt die Steuerung 49 die Stereobasis entsprechend nach, so dass weiterhin die Stereobasis orthogonal zu der Verbindungslinie zwischen dem Operateur 135 und der optischen Achse 5 angeordnet ist. Damit erhält der Operateur 135 über die Anzeigevorrichtung 141 einen stereoskopischen Bildeindruck des Operationsfelds 139, der im wesentlichen einem Bildeindruck entspricht, den der Operateur 135 beim Blick durch ein in den Figur 1 und 2 dargestelltes Stereo-Mikroskop auf das Operationsfeld 139 erhalten würde. Allerdings ist der Operateur 135 nun in seiner Bewegungsfreiheit um das Operationsfeld 139 herum nicht mehr durch die Stellung von Okkularen des StereoMikroskops beeinträchtigt. Insbesondere kann das Untersuchungssystem 1 für einen zweiten Operateur, dessen azimutale Position in Figur 19 mit 153' bezeichnet ist, über eine von ihm getragene Anzeigevorrichtung ebenfalls eine stereoskopische Darstellung des Operationsfelds 139 erhalten, wobei eine Stereobasis 92 für die dem zweiten Operateur zugeführte stereoskopische Darstellung an dessen azimutale Position ϕ₂ angepaßt ist, indem auch die Stereobasis 92 sich orthogonal zu einer Verbindungslinie zwischen der Position 153' des zweiten Operateurs und der optischen Achse 5 erstreckt.

Die Positionserfassungsvorrichtung 161 ist unter Bezugnahme auf Figur 20 symmetrisch zur optischen Achse 5 auf dem Mikroskop 138 angeordnet. Sie erfaßt Positionen von einem oder mehreren Operateuren im Operationssaal in dem Polarkoordinatensystem ϕ, θ mit Ursprung an dem Fixpunkt 151. Die Positionserfassungsvorrichtung 161 umfaßt einen konischen Spiegel 163, welcher Strahlung, die aus einem Winkelbereich ±γ zu einer horziontalen Ebene 165 auf den Spiegel 163 trifft, auf eine Optik 167 reflektiert, welche diese Strahlung auf einen CCD-Chip 169 abbildet.

Der Operateur 135 trägt an seinem Kopf eine Lichtquelle, ist mit der Vorrichtung 161 in dem Operationssaal lokalisierbar, da seine azimutale Position um die Achse 5 sowie seine Elevation bezüglich der Ebene 165 in einem Bereich ±γ durch Auswertung des Bildes des CCD-Chips 169 bestimmt werden kann. Sind mehrere Operateure in dem Operationssaal, so ist es möglich, dass ein jeder Operateur eine Lichtquelle trägt, deren Leuchtintensität sich zeitabhängig ändert, wobei für jeden Operateur ein anderes charakteristisches Zeitmuster für die Leuchtintensität vorgesehen ist. Durch Auswertung des Bildes der Kamera 169 und Berücksichtigung der registrierten Zeitmuster, ist es somit möglich, auf die Positionen der einzelnen Operateure zu schließen. Die Auswertung des Bildes der Kamera 169 wird durch die Steuerung 49 vorgenommen, welche entsprechend der registrierten Position des jeweiligen Operateurs dessen Stereobasis 91, 92 in Azimutrichtung um die optische Achse 5 des Mikroskops 138 ändert.

Die Steuerung 49 kann auch auf Änderungen der Elevation θ des Operateurs reagieren, indem sie die Stereobasen parallel verschiebt, wie dies im Zusammenhang mit dem anhand der Figur 12 erläuterten Ausführungsbeispiel dargestellt wurde.

Eine weitere Möglichkeit für die entfernte Anordnung des Beobachters von dem beobachteten Objekt ist beispielsweise dann gegeben, wenn an dem Operationstisch nur für wenige Personen Platz ist und weitere Personen, beispielsweise Studenten, diese Operation "hautnah" verfolgen möchten. Es können diese Personen sich dann außerhalb des Operationssaals befinden, für eine jede dieser Personen kann ein Fixpunkt und eine Orientierung ihres Benutzerkoordinatensystems im Raum festgelegt werden, so dass sie dann bei Betrachtung ihrer kopfgetragenen Anzeige einen Eindruck erhalten, wie wenn der beobachtete Bereich des Patienten um diesen ihren Fixpunkt herum angeordnet wäre.

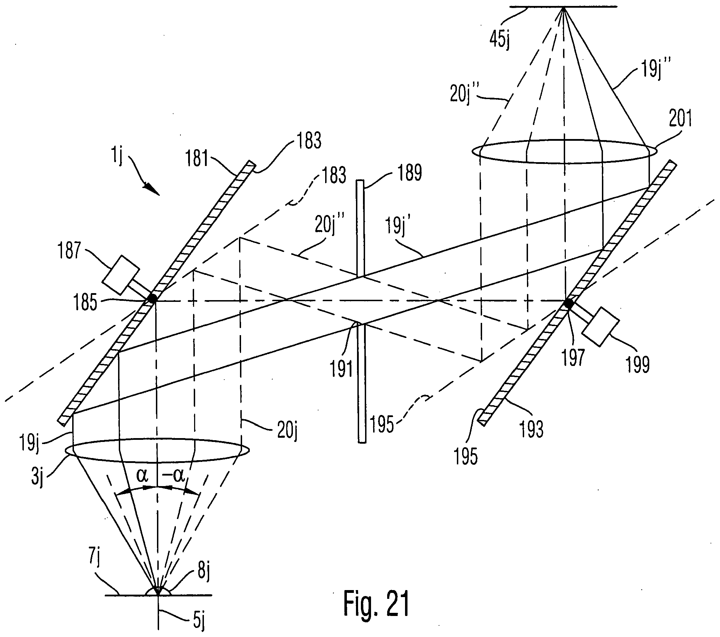

Figur 21 zeigt in schematischer Darstellung ein weiteres Stereo-Untersuchungssystem 1j. Dieses umfaßt wiederum ein Mikroskopobjektiv 3j mit einer optischen Achse 5j und einer Objektebene 7j zur Anordnung eines Objekts. Das Objektiv 3j bildet das Objekt nach Unendlich ab, so dass ein aus der Objektebene 7j an der optischen Achse 5j austretendes konisches Strahlenbündel in ein paralleles Strahlenbündel umgeformt wird. Dieses trifft auf einen hinter dem Objektiv 3j angeordneten Spiegel 181 mit einer Spiegelfläche 183, welche die optische Achse 5j in einem Punkt 185 schneidet. Um diesen Punkt 185 ist der Spiegel 181 in zwei Raumrichtungen schwenkbar, wobei ein Antrieb 187 zur Verschwenkung des Spiegels 181 vorgesehen ist.

Die an der Spiegelfläche 183 reflektierte Strahlung trifft auf eine Blende 189 mit einer zentralen Blendenöffnung 191.

In der in Figur 21 mit durchgezogenen Linien dargestellten Stellung des Spiegels 181 wird die Blendenöffnung 191 von einem Teilstrahlenbündel 19j' durchsetzt, welches aus einem Teilstrahlenbündel 19j nach Reflexion an der Spiegelfläche 183 entsteht. Das Teilstrahlenbündel 19j ist das Teilstrahlenbündel, dessen Zentralstrahl unter einem Winkel α zur optischen Achse 5j von dem Objekt 8j ausgeht.

Das Teilstrahlenbündel 19j' trifft auf einen weiteren Spiegel 193, dessen Spiegelfläche 195 symmetrisch zu der Spiegelfläche 183 des Spiegels 181 angeordnet ist, wobei die Spiegelfläche 195 um einen Punkt 197 in zwei Raumrichtungen schwenkbar ist. Der Punkt 197 ist bezüglich der Ebene der Blende 189 symmetrisch zu dem Punkt 185 angeordnet, und zur Verschwenkung des Spiegels 193 ist ein in Figur 21 lediglich symbolisch dargestellter Antrieb 199 vorgesehen.

Nach Reflexion an der Spiegelfläche 195 durchsetzt das Teilstrahlenbündel 19j' eine Abbildungsoptik 201 und trifft als konisches Teilstrahlenbündel 19j" auf eine lichtempfindliche Fläche 45j einer Kamera, wobei die Abbildungsoptik 201 derart ausgebildet ist, dass das Objekt 8j in der Objektebene 7j auf die lichtempfindliche Fläche 45j abgebildet wird.

In der in Figur 21 gezeigten Schwenkstellung der Spiegel 181 und 193 nimmt die Kamera 45j somit ein Bild des Objekts 8j bei Betrachtung unter einem Winkel α zur optischen Achse auf.

Mit gestrichelten Linien sind in Figur 21 Schwenkstellungen der Spiegelflächen 183 und 195 dargestellt, in denen ein von dem Teilstrahlenbündel 19j verschiedenes Teilstrahlenbündel 20j das Objekt 8j auf die Kamera 45j abbildet. Ein Zentralstrahl des Teilstrahlenbündels 20j ist um einen Winkel -α zur optischen Achse 5j geneigt.

Die Antriebe 187 und 199 werden durch eine in Figur 21 nicht dargestellte Steuerung angetrieben. Diese Steuerung kann somit durch Verschwenken der Spiegelflächen 183 und 195 einen innerhalb eines Einstellbereiches beliebigen Beobachtungswinkel einstellen, unter dem das Objekt 8j auf die Kamera 45j abgebildet wird. Die Steuerung kann somit sequentiell aus der Kamera 45j ein Bild unter einem ersten Beobachtungswinkel auslesen, daraufhin die Spiegel 181 und 193 umstellen und aus der Kamera 45j eine Aufnahme unter einem zweiten Beobachtungswinkel auslesen. Die Aufnahmen unter dem ersten und dem zweiten Beobachtungswinkel werden dann einem linken bzw. rechten Auge des Benutzers zugeführt, so dass bei diesem ein stereoskopischer Eindruck des Objekts 8j entsteht.

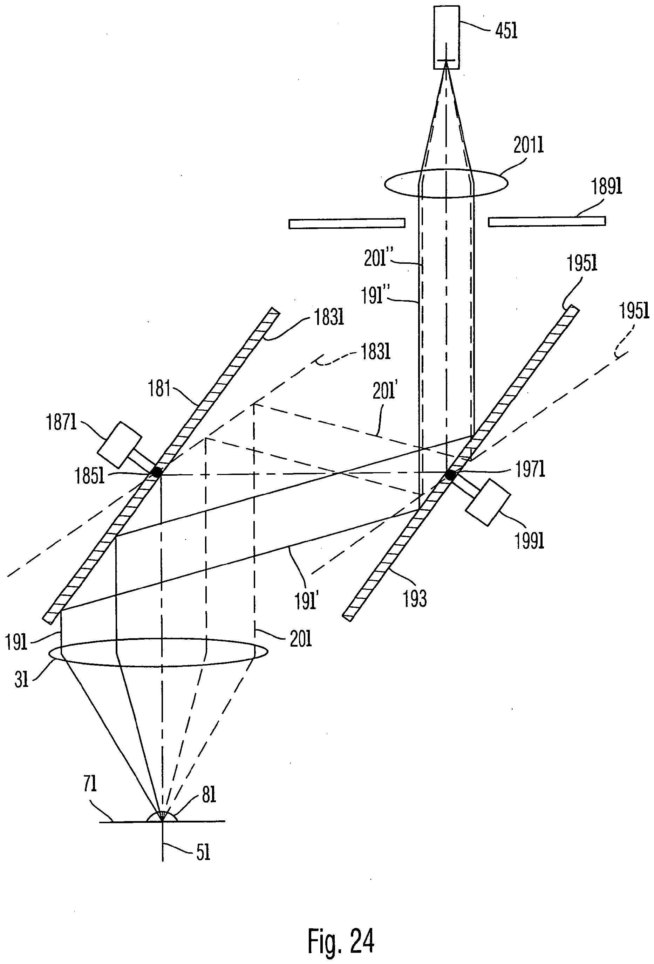

In der in Figur 24 dargestellten Variante sind der Abstand und die Kippwinkel der Kippspiegel 181, 193 so aufeinander abgestimmt, dass der erste Kippspiegel 181 das Teilstrahlenbündel 19l', 20l' immer auf einen zentralen Bereich des zweiten Kippspiegels 193 wirft, und der zweite Kippspiegel 193 nur jeweils diesen zentralen Bereich als Teilstrahlenbündel 19l", 20l" in die Kamera 45l abbildet. Dazu ist die Blende 189 zwischen zweitem Kippspiegel 193 und Kamera 45l angeordnet.

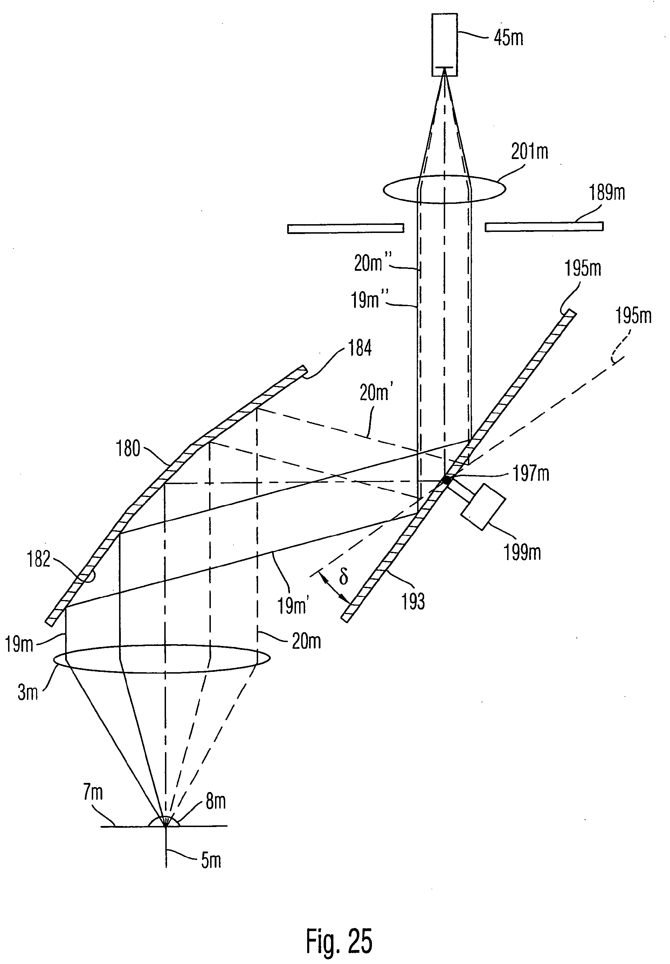

In der in Figur 25 dargestellten Ausführungsform ist gegenüber der vorbeschriebenen Variante der erste Kippspiegel durch einen feststehenden Facettenspiegel 180 ersetzt. Die Facetten 182, 184 des Facettenspiegels 180 sind dabei paarweise in einem Winkel zueinander geneigt, der dem Kippwinkel δ des Kippspiegels 193 entspricht. Dadurch werden zu jeder Zeit Teilstrahlenbündel 19m', 20m' von jeder Spiegelfacette 182, 184 auf den zweiten, als Kippspiegel ausgebildeten Spiegel 193 geworfen, der aus diesen mehreren Teilstrahlenbündeln 19m', 20m' je nach Kippstellung eines auswählt und das ausgewählte Teilstrahlenbündel 19m" bzw. 20m" in Richtung auf die Kamera 45m reflektiert, während die anderen Teilstrahlenbündel 20m" bzw. 19m" von der Blende 189m absorbiert werden.

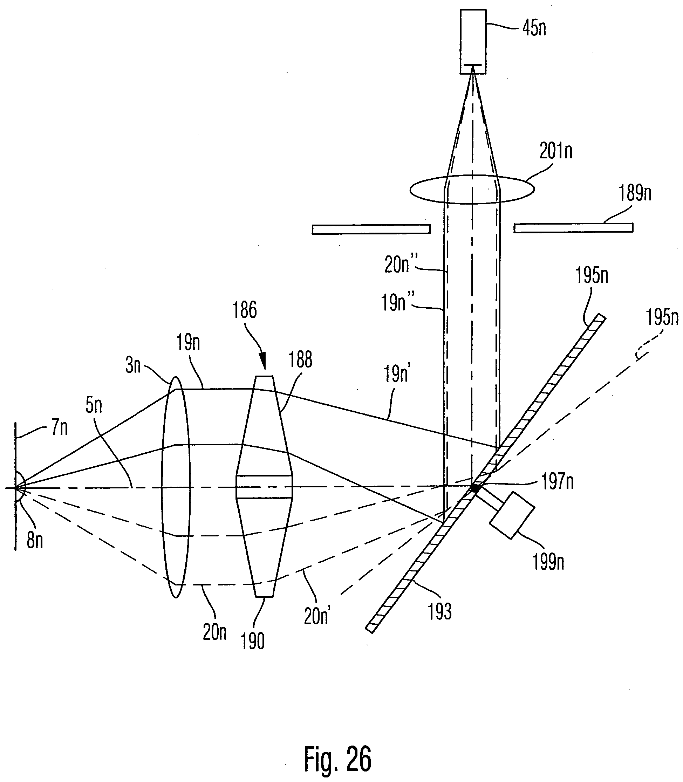

Eine weitere Variante der vorbeschriebenen Ausführungsform ist in Figur 26 skizziert. Hier ist statt des Facettenspiegels eine Prismenanordnung 186 in Strahlrichtung hinter dem Objektiv angeordnet. Die Prismenanordnung 186 besteht aus einem Ring aus Einzelprismen 188, 190, die jeweils ein Teilstrahlenbündel 19n', 20n' in Achsenrichtung ablenken. Auf der optischen Achse 5n ist wiederum ein Kippspiegel 193n angeordnet, der in seinen verschiedenen Kippstellungen je eines der Teilstrahlenbündel 19n" in Richtung auf die Kamera 45n lenkt, während die anderen Teilstrahlenbündel 20n" von der zwischen Spiegel 193n und Kamera 54n angeordneten Blende 189n absorbiert werden.

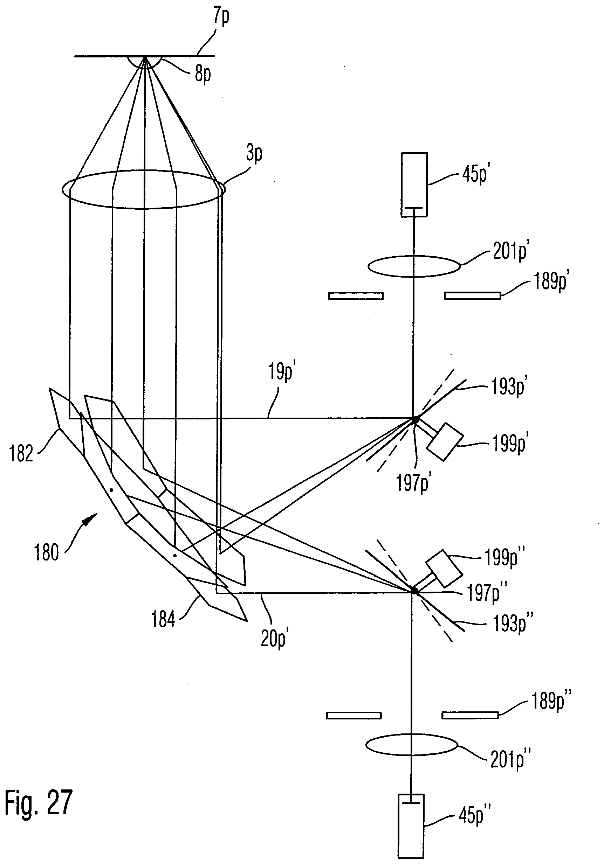

Ferner zeigt Figur 27 eine Variante der beiden vorbeschriebenen Anordnungen, bei der statt des einen Kippspiegels 193n und der einen Kamera 45n jeweils deren zwei vorgesehen sind. Die Facetten 182, 184 des Facettenspiegels 180 (bzw., in einer nicht dargestellten Abwandlung, die Prismen einer Prismenanordnung) sind dabei so ausgebildet, dass einander gegenüberliegende Facetten 182, 184 (bzw. Prismen) ihr Teilstrahlenbündel 19p' bzw. 20p' jeweils auf verschiedene Kippspiegel 193p', 193p", und damit auf verschiedene Kameras 45p', 45p" lenken. Jeder der beiden Kippspiegel 193p', 193p" wählt, entsprechend seiner Kippstellung, aus den ihm zugeordneten Facetten 182 bzw. 184 (bzw. Prismen) ein Teilstrahlenbündel 19p' bzw. 20p' aus, so dass zu jeder Zeit jede der beiden Kameras 45p', 45p" ein Teilstrahlenbündel 19p', 20p' zur Erzeugung von entsprechenden Darstellungen empfängt. Die den beiden Kippspiegeln 193p', 193p" zugeordneten Facetten 182, 184 sind dabei außerdem in Umfangsrichtung des Facettenspiegels 180 alternierend angeordnet. Die in Figur 27 dargestellte Version hat einen Facettenspiegel mit 6 fünfeckigen Facetten, die um ein zentrales Sechseck herum angeordnet sind. Die nicht in der Ebene der drei Spiegelmittelpunkte liegenden vier der sechs Facetten sind jeweils etwas zur Mitte hin hochgeklappt, die anderen zwei, einander gegenüberliegenden Facetten liegen etwa in einer Ebene mit dem zentralen Sechseck. Je eine dieser flachliegenden Facetten ist zusammen mit den beiden jeweils schräg gegenüberliegenden, hochgeklappten Facetten jeweils einem Kippspiegel 193p', 193p" zugeordnet. Diese Kippspiegel 193p' bzw. 193p" wählen also je nach Kippstellung eine aus drei Facetten aus und reflektieren das jeweilige Teilstrahlenbündel 19', 20' in Richtung auf die ihnen zugeordnete Kamera 45p' bzw. 45p".

In einer nicht dargestellten Untervariante sind die beiden einzeln beweglichen Kippspiegel 193p', 193p" durch einen einzelnen, drehbaren Polyederspiegel in Form eines unregelmäßigen Pyramidenstumpfs ersetzt. Je nach Drehstellung stellt dieser Pyramidenstumpf in der Ebene der optischen Achse zwei einander gegenüberliegende Spiegelflächen bereit, die jeweils eines der beiden ausgewählten Teilstrahlenbündel auf eine Kamera lenken.

In den Figuren 24 bis 27 sind die jeweiligen Steuerungen der Kippspiegel-Antriebe nicht eingezeichnet.

In den Ausführungsformen mit mehreren Kameras können diese auch durch verschiedene Bereiche eines lichtempfindlichen Elements einer einzigen Kamera gebildet sein.

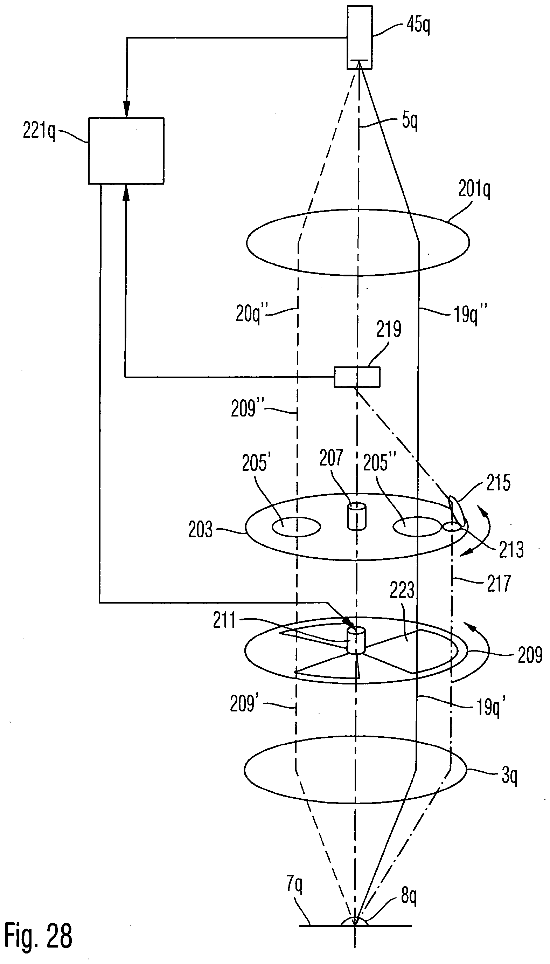

Schliesslich zeigt Figur 28 eine Ausführungsform, bei der eines der Teilstrahlenbündel 19q" und 20q" durch eine drehbare Doppelblende 203 mit zwei Blendenöffnungen 205', 205" herausgegriffen wird. Die Verdrehung der Doppelblende 203 erfolgt durch einen Antrieb 207, der von einer Steuerung 221 gesteuert wird. Außerdem umfasst diese Ausführungsform ein rotierendes Chopperrad 209 mit einer ungeraden Anzahl offener Sektoren 223, hier mit drei Sektoren. Das Chopperrad 209 wird durch den Antrieb 211 angetrieben, der gleichfalls durch die Steuerung 221 gesteuert wird. Die beiden Blendenöffnungen 205', 205" kommen bei Rotation des Chopperrades 209 abwechselnd mit offenen Sektoren 223 des Chopperrades 209 in Überdeckung. Demzufolge wird abwechselnd eines der Teilstrahlenbündel 19q' und 20q' zur Kamera 45q geführt und dort detektiert, so dass die Kamera 45q abwechselnd Bilder eines Bereichs 8q des Objekts 7q empfängt.

Damit bei Verdrehung der Doppelblende 203 die Kamera 45q korrekt synchronisiert bleibt, ist in der Doppelblende 203 ferner ein Markierungsloch 213 vorgesehen. Durch dieses Loch tritt, sofern das Chopperrad 209 gerade einen offenen Sektor in übereinstimmender Winkelposition aufweist, ein von dem Objekt 7q ausgehendes Referenzstrahlenbündel 217, trifft auf den mit der Doppelblende 203 verbundenen Ablenkspiegel 215, und wird von der auf der optischen Achse 5q angeordneten Photodiode 219 detektiert. Das Ausgabesignal der Photodiode 219 ist also mit einer Frequenz moduliert, die von der Rotationsgeschwindigkeit und Sektorenzahl des Chopperrades 209 anhängt, wobei die Phase dieser Modulation von der Differenz der Phasen von Chopperrad 209 und Doppelblende 203 abhängt. Das Ausgabesignal der Photodiode 219 wird der Steuerung 221 zugeführt, und die Steuerung 221 steuert den Antrieb 211 des Chopperrades 209 so, dass eine konstante Modulationsphase aufrechterhalten wird. Damit ist die Kamera bei jeder Verdrehungsstellung der Doppelblende 203 mit dem Chopperrad 209 korrekt synchronisiert, und stellt daher korrekt alternierende Bildfolgen bereit.

Eine weitere Variante einer Selektoranordnung zur Auswahl verschiedener Teilstrahlenbündel zur Abbildung des Objekts auf eine Kamera kann durch eine um eine Achse rotierbare Blende gegeben sein, welche eine dezentrale Blendenöffnung aufweist. Die Drehachse der Blende fällt mit der optischen Achse eines Mikroskopobjektivs zusammen, und durch Verdrehen der Blende um die optische Achse kann dann ein Azimutwinkel des Teilstrahlenbündels ausgewählt werden, welches auf eine Kamera abgebildet wird. Somit kann ein erstes Kamerabild des Objekts in einer ersten Drehstellung der Blende um die optische Achse aufgenommen werden, und ein zweites Kamerabild kann in einer anderen Drehstellung der Blende um die optische Achse aufgenommen werden. Die beiden Kamerabilder werden dann im linken bzw. rechten Auge des Beobachters zugeführt, so dass bei diesem ein stereoskopischer Eindruck von dem Objekt entsteht.

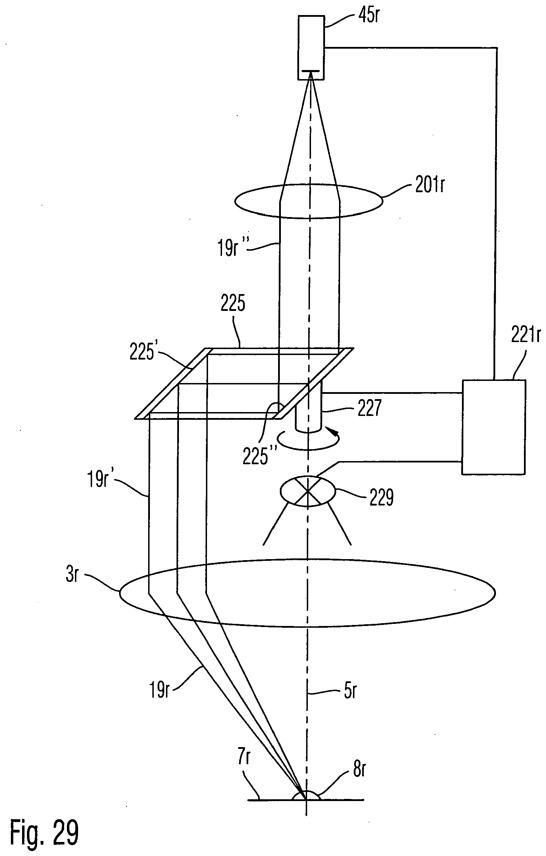

Eine ähnliche Ausführungsform des Stereo-Untersuchungssystems zeigt Figur 29. Hier rotiert ein Spiegelprisma 225, angetrieben durch einen Antrieb 227, um eine mit der optischen Achse 5r zusammenfallende Drehachse. Dadurch greift das Prisma 225 mit Spiegelflächen 225' und 225" zu jedem Zeitpunkt ein anderes Teilstrahlenbündel 19r' aus dem objektseitigen Strahlenbündel heraus und leitet es der Kamera 45r zu. Die Auswahl bestimmter Teilstrahlenbündel 19r" erfolgt hier durch eine gepulste Lichtquelle 229, deren Taktung vom Beobachter mit der Steuerung 221r gesteuert werden kann. Als steuerbar gepulste Lichtquelle 229 ist zum Beispiel eine Stroboskoplampenanordnung vorgesehen. Je Beobachter wird die Lampenanordnung 229 zu einer Blitzfolge der doppelten Prismen-Drehfrequenz veranlasst; die einer Blitzfolge entsprechenden Kamerabilder werden alternierend den beiden Stereobildern für den jeweiligen Beobachter zugeordnet. Die Phasenlage zwischen den verschiedenen Blitzfolgen bestimmt die Winkeldifferenz zwischen den Stereobasen für die Beobachter.

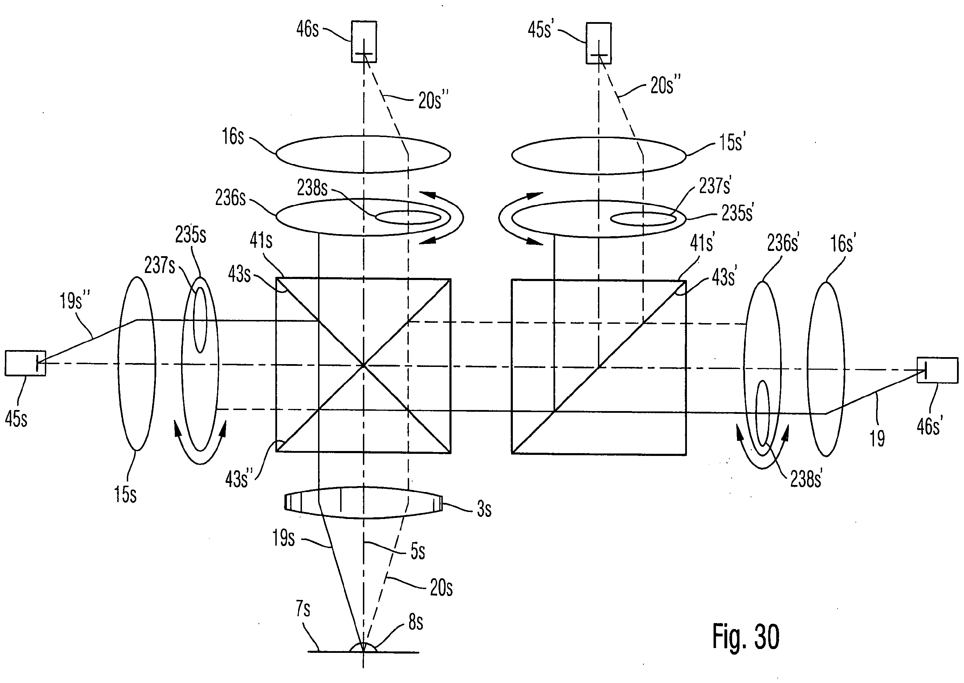

Die Figur 30 zeigt demgegenüber eine Ausführungsform, bei der jedem der je zwei Augen von zwei Beobachtern eine Kamera 45s, 46s, 45s', 46s' zugeordnet ist. Die Auswahl der zugehörigen Teilstrahlenbündel erfolgt hier durch eine Aufteilung des Strahlenbündels auf die beiden Beobachter durch den Kreuzstrahlteiler 41s; dieser bewirkt außerdem eine Aufteilung des Strahlenbündels auf die beiden Teilstrahlenbündel für die beiden Augen des ersten Beobachters. Die Aufteilung des anderen Strahlteils für die beiden Augen des zweiten Beobachters erfolgt im Strahlteiler 41s'. Jeder der vier Kameras 45s, 46s, 45s', 46s' ist eine um die optische Achse 5s rotierbare Blende 235s, 236s, 235', 236' mit einem Selektorbereich 237s, 238s, 237s', 238s' zugeordnet. Dabei sind die einem Beobachter zugeordneten Blenden 235s und 236s bzw. 235s' und 236s' jeweils so gekoppelt, dass sie einander gegenüberliegende Teilstrahlenbündel 19s und 20s passieren lassen. Die Drehpositionen der verschiedenen Beobachtern zugeordneten Blenden 235s und 235s' bzw. 236s und 236s' sind demgegenüber frei wählbar. Die Kameraoptiken 15s, 16s, 15s' und 16s' fokussieren die jeweils herausgegriffenen Teilstrahlenbündel 19s" bzw. 20s". Durch eine nicht gezeigte Ansteuerung kann jeder Beobachter das ihm zugeordnete Blendenpaar 235s, 236s bzw. 235s', 236s' so einstellen, dass ihm die gewünschte Stereoansicht des Objekts 8s zur Verfügung gestellt wird.

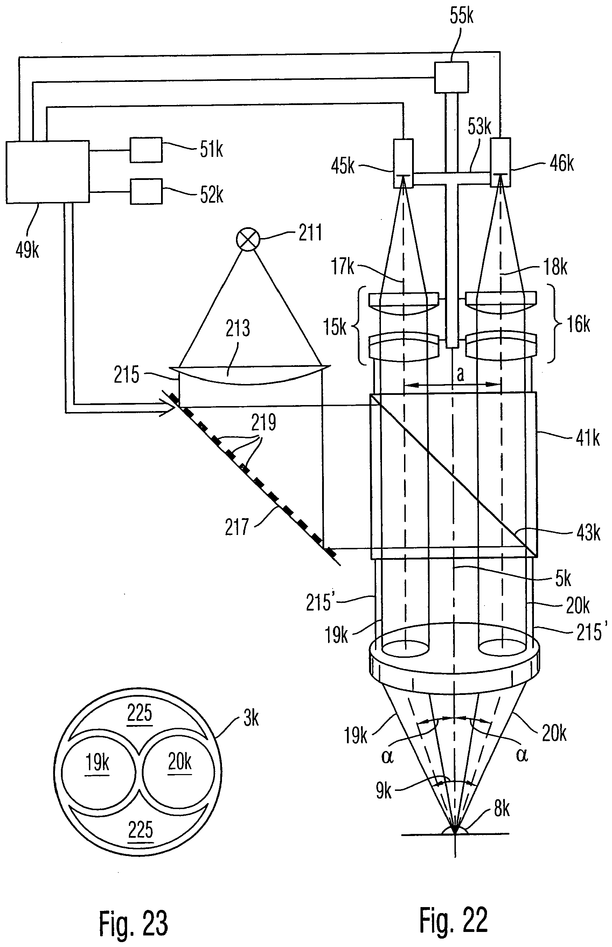

In Figur 22 ist eine vorteilhafte Ausgestaltung einer Beleuchtung für ein erfindungsgemäßes Stereo-Untersuchungssystem exemplarisch anhand einer Ausführungsform dargestellt, welche der in Figur 3 gezeigten Ausführungsform ähnlich ist. Licht einer Lichtquelle 211 wird von einer Optik 213 zu einem parallelen Strahl 215 geformt, welcher auf ein Feld 217 von symbolisch dargestellten Mikrospiegeln 219 fällt. Die Mikrospiegel 219 sind von einer Steuerung 49k ansteuerbar, welche ebenfalls Kameras 45k und 46k um eine optische Achse 5k eines Objektivs 3k verdreht, um einem linken und einem rechten Auge eines Benutzers über Anzeigen 51k, 52k eine stereoskopische Darstellung eines in einer Objektebene 7k des Objektivs 3k angeordneten Objekts 8k zu liefern. Die Kamera 45k greift hierzu ein Teilstrahlenbündel 19k aus dem gesamten von dem Objekt 8k austretenden und dem Objektiv 3k verarbeiteten Strahlenbündel heraus, welches unter einem Winkel α zur optischen Achse 5k geneigt ist. Die andere Kamera 46k greift entsprechend ein Teilstrahlenbündel 20k heraus, welches unter einem Winkel - α zur optischen Achse 5k geneigt ist.

Die Mikrospiegel 219 sind durch die Steuerung 49k selektiv jeweils von einem ersten Schaltzustand in einen zweiten Schaltzustand umschaltbar. In dem ersten Schaltzustand reflektieren sie das in dem parallelen Strahl 215 enthaltene Licht der Strahlungsquelle 211 unter 90°, so dass es über eine Spiegelfläche 43k eines Strahlteilers 41k in den Strahlengang des Mikroskops eingekoppelt wird und über das Objektiv 3k auf das Objekt 8k fokussiert wird. In dem zweiten Schaltzustand reflektieren die Mikrospiegel 219 jeweils das Licht des Strahls 215 derart, dass eine Einkopplung in den Strahlengang des Mikroskops nicht erfolgt und entsprechend die Strahlung der Lampe 211 nicht auf das Objekt 8k gelangt.

Die Steuerung 49k steuert die Mikrospiegel 219 nun derart an, dass nicht das Licht des gesamten Querschnitts des Strahls 215 zur Beleuchtung des Objekts 8k eingesetzt wird. Dies ist anhand der Figur 23 näher erläutert, welche einen Querschnitt durch das Objektiv 3k und eine Anordnung der Querschnitte Teilstrahlenbündel 19k und 20k in der Ebene des Objektivs 3k darstellt. Die Querschnitte der Teilstrahlenbündel 19k und 20k nehmen nur einen Teil des Gesamtquerschnitts des Objektivs 3k ein. Außerhalb der Querschnitte Teilstrahlenbündel 19k und 20k angeordnete Bereiche des Objektivs 3k werden von Bereichen 225 eingenommen, in welchen die zur Beleuchtung des Objekts 8k eingesetzte Strahlung das Objektiv 3k durchsetzt. Dies wird durch eine entsprechende Ansteuerung der Mikrospiegel 219 erreicht. In den außerhalb der Bereiche 225 eingeordneten Bereichen des Querschnitts des Objektivs 3k durchsetzt keine Strahlung der Lichtquelle 211 das Objektiv 3k. Durch diese räumliche Trennung der für die Beleuchtung des Objekts 8k und deren Abbildung verwendeten Querschnittsbereiche des Objektivs 3k werden durch die Beleuchtung hervorgerufene störende Spiegelungen und Reflexe in den durch die Kameras 45k und 46k aufgenommenen Bildern des Objekts 8k vermieden.

Im Zusammenhang mit den Figuren 22 und 23 erläuterte Strahlführung für die Beleuchtung kann auf jedes andere vorangehend erläuterte Untersuchungssystem übertragen werden, um durch die Beleuchtungsstrahlung erzeugte Reflexe in den aufgenommenen Bildern zu reduzieren.

Eine Variante zu dem in den Figuren 4 und 5 dargestellten Stereo-Untersuchungssystem kann darin bestehen, dass anstatt der Kameras 45a, 46a bzw. 45a' und 46a' Okulare zum direkten Einblick von zwei Beobachtern vorgesehen sind. Die Beobachter betrachten das abgebildete Objekt damit nicht über separate Anzeigen, wie etwa Bildschirme, sondern auf eine ähnliche Weise, wie bei dem anhand von Figur 2 erläuterten herkömmlichen Stereo-Mikroskop. Allerdings weist ein derart abgewandeltes Stereo-Untersuchungssystem den Vorteil auf, dass jeder Beobachter sein Okularpaar frei um die optische Achse drehen kann und damit der Behinderung der festen Anordnung in Umfangsrichtung um die optische Achse, wie dies bei dem in Figur 2 gezeigten herkömmlichen Stereo-Mikroskop der Fall ist, nicht mehr unterworfen ist. Hierbei ist es möglich, in einem Strahlengang zwischen dem jeweiligen Strahlteiler und den Okularen separate Zoomsysteme vorzusehen, so dass ein jeder Beobachter seine eigene Zoomstellung wählen kann. Das Objektiv kann ein Objektiv mit variablem Arbeitsabstand sein.

Bei der vorangehend im Zusammenhang mit den Figuren 18 und 19 erläuterten Ausführungsform liegt der Fixpunkt 151 für das Benutzerkoordinatensystem auf der optischen Achse. Dies ist dann sinnvoll, wenn der Benutzer unmittelbar Manipulationen an dem beobachteten Objekt 133 vornehmen soll, wie dies in dem in Figur 18 gezeigten Fall des Chirurgen 135 im Operationssaal zutrifft.

Andererseits ist es auch möglich, dass der Benutzer entfernt von dem beobachteten Objekt angeordnet ist und somit der Fixpunkt des Benutzerkoordinatensystems nicht mit dem beobachteten Bereich des Objekts zusammenfällt. Eine Anwendung hierfür wäre beispielsweise bei einem Telechirurgieverfahren gegeben, wo der Operateur entfernt von dem Patienten angeordnet ist und über einen ferngesteuerten Roboter den Eingriff an dem Patienten vornimmt. Es ist dann eine Abbildung zwischen einem Azimut des Benutzers in dem Benutzerkoordinatensystem und einem Azimut der Stereobasis um die optische Achse des Mikroskops definiert. Durch Bewegen seines Kopfes kann der Benutzer dann ebenfalls aus unterschiedlichen Perspektiven Eindrücke von dem beobachteten Objekt gewinnen.

## Patentansprüche

1. Stereo-Untersuchungssystem zur Abbildung eines Objekts (8) oder eines von einem Objekt erzeugten Zwischenbilds, umfassend:
eine Objektivanordnung (9) mit einer optischen Achse (5) und einer Objektebene (7) zur Anordnung des abzubildenden Objekts (8) bzw. Zwischenbilds, wobei die Objektivanordnung (9) ein aus der Objektebene (7) in einen Raumwinkelbereich emittiertes objektseitiges Strahlenbündel (11) empfängt und in ein bildseitiges Strahlenbündel (13) überführt,
eine Selektoranordnung zur Auswahl von wenigstens einem Paar von Teilstrahlenbündeln (19, 20) aus dem bildseitigen Strahlenbündel (13), und
eine Bildübertragungsvorrichtung (51, 52) zur Erzeugung von Darstellungen der durch das wenigstens eine Paar von Teilstrahlenbündeln (19, 20) bereitgestellten Bilder,
sowie eine Beleuchtungsvorrichtung mit einem Strahlkoppler (41k) zur Überlagerung eines Querschnitts (225) eines Beleuchtungsstrahls (215) mit dem Strahlquerschnitt des bildseitigen Strahlenbündels (13);
**dadurch gekennzeichnet, dass**
die Selektoranordnung dazu ausgebildet ist, einen Strahlquerschnitt wenigstens eines der beiden Teilstrahlenbündel (19, 20) relativ zu einem Strahlquerschnitt des bildseitigen Strahlenbündels (13) zu verlagern, wobei eine Steuerung (49) vorgesehen ist, um die Selektoranordnung zur Verlagerung des Strahlquerschnitts des wenigstens einen Teilstrahlenbündels (19, 20) in Umfangsrichtung um die optische Achse (5) anzusteuern, wobei die Beleuchtungsvorrichtung derart ansteuerbar ist, dass der Querschnitt (225) des Beleuchtungsstrahls (215) im Wesentlichen nicht mit den Strahlquerschnitten der Teilstrahlenbündel (19k, 20k) überlappt.

2. Stereo-Untersuchungssystem nach Anspruch 1, wobei die Selektoranordnung eine gepulste Lichtquelle (229) umfasst.

3. Stereo-Untersuchungssystem nach Anspruch 2, wobei die Selektoranordnung einen insbesondere um die optische Achse verlagerbaren Reflektor (225', 225") umfasst.

4. Stereo-Untersuchungssystem nach Anspruch 1, wobei die Bildübertragungsvorrichtung wenigstens ein Paar Kameras (45, 46) umfasst, wobei eine jede Kamera einem Teilstrahlenbündel des Paars von Teilstrahlenbündeln zugeordnet ist, um eine Darstellung des durch dieses Teilstrahlenbündel bereitgestellten Bildes zu erzeugen.

5. Stereo-Untersuchungssystem nach Anspruch 4, wobei eine Strahlteileranordnung (41) zur Zuführung des bildseitigen Strahlenbündels (13) an mehrere Selektoranordnungen vorgesehen ist, wobei einer jeden Selektoranordnung eine eigene Bildübertragungsvorrichtung zugeordnet ist.

6. Stereo-Untersuchungssystem nach Anspruch 5, wobei die Selektoranordnung eine rotierbare Blende (235s, 236s, 235s', 236s') mit dezentraler Öffnung (237s, 238s, 237s', 238s') aufweist.

7. Stereo-Untersuchungssystem nach einem der Ansprüche 1 bis 6, wobei die Beleuchtungsvorrichtung ein Feld aus einer Mehrzahl von selektiv schaltbaren Spiegeln (219) umfasst.

8. Stereo-Bilderzeugungsvorrichtung zur Erzeugung wenigstens eines Paars von Darstellungen eines Objekts (8) zur Betrachtung durch wenigstens einen Benutzer, umfassend:
- eine Detektoranordnung (45, 46) zum Detektieren von von einem Bereich des Objekts in wenigstens zwei Raumwinkelbereiche (α, -α) ausgesandter Strahlung und zum Bereitstellen von der registrierten Strahlung entsprechenden Strahlungsdaten,
- eine Positionserfassungseinrichtung (161) zum Erfassen einer ersten Position des Benutzers relativ zu einem Fixpunkt (151) in einem Benutzerkoordinatensystem,
- eine Selektoranordnung, um die wenigstens zwei Raumwinkelbereiche (α, -α) in Abhängigkeit von einem Azimut (ϕ) oder/und einer Elevation (θ) der Benutzerposition in dem Benutzerkoordinatensystem festzulegen, und
- eine Anzeigevorrichtung (51, 52) zum Anzeigen einer ersten Darstellung für ein linkes Auge des Benutzers und Anzeigen einer zweiten Darstellung für ein rechtes Auge des Benutzers in Abhängigkeit von den Strahlungsdaten, wobei die Detektoranordnung und die Selektoranordnung das Stereo-Untersuchungssystem nach einem der Ansprüche 1 bis 7 umfassen.

## Claims

1. Stereo examination system for imaging an object (8) or an intermediate image produced by an object, comprising:
an objective arrangement (9) with an optical axis (5) and an object plane (7) for arranging the intermediate image or the object (8) to be imaged, wherein the objective arrangement (9) receives an object-side beam (11) emitted from the object plane (7) into a solid angle region and converts said beam into an image-side beam (13),
a selector arrangement for selecting at least one pair of partial beams (19, 20) from the image-side beam (13), and
an image transmission apparatus (51, 52) for producing representations of the images provided by the at least one pair of partial beams (19, 20),
and an illumination apparatus having a beam coupler (41k) for superimposing the beam cross section of the image-side beam (13) on a cross section (225) of an illumination beam (215);
**characterized in that**
the selector arrangement is embodied to displace a beam cross section of at least one of the two partial beams (19, 20) relative to a beam cross section of the image-side beam (13), wherein a controller (49) is provided for actuating the selector arrangement for displacing the beam cross section of the at least one partial beam (19, 20) in the circumferential direction around the optical axis (5),
wherein the illumination apparatus is actuatable in such a way that the cross section (225) of the illumination beam (215) substantially does not overlap the beam cross sections of the partial beams (19k, 20k).

2. Stereo examination system according to Claim 1, wherein the selector arrangement comprises a pulsed light source (229).

3. Stereo examination system according to Claim 2, wherein the selector arrangement comprises a reflector (225', 225"), which is displaceable about the optical axis in particular.

4. Stereo examination system according to Claim 1, wherein the image transmission apparatus comprises at least one pair of cameras (45, 46), wherein each camera is associated with a partial beam of the pair of partial beams in order to produce a representation of the image provided by this partial beam.

5. Stereo examination system according to Claim 4, wherein a beam splitter arrangement (41) is provided for feeding the image-side beam (13) to a plurality of selector arrangements, wherein a dedicated image transmission apparatus is associated with each selector arrangement.

6. Stereo examination system according to Claim 5, wherein the selector arrangement has a rotatable stop (235s, 236s, 235s', 236s') with an off-centre aperture (237s, 238s, 237s', 238s').

7. Stereo examination system according to any one of Claims 1 to 6, wherein the illumination apparatus comprises a field made of a plurality of selectively switchable mirrors (219).

8. Stereo image production apparatus for producing at least one pair of representations of an object (8) for observation by at least one user, comprising:
- a detector arrangement (45, 46) for detecting radiation emitted by a region of the object in at least two solid angle regions (α, -α) and for providing radiation data corresponding to the registered radiation,
- a position capture device (161) for capturing a first position of the user relative to a fixed point (151) in a user coordinate system,
- a selector arrangement in order to set the at least two solid angle regions (α, -α) depending on an azimuth (ϕ) and/or an elevation (θ) of the user position in the user coordinate system, and
- a display apparatus (51, 52) for displaying a first presentation for a left eye of the user and for displaying a second presentation for a right eye of the user depending on the radiation data, wherein the detector arrangement and selector arrangement comprise the stereo examination system according to any one of Claims 1 to 7.

## Revendications

1. Système d'inspection stéréoscopique destiné à former une image d'un objet (8) ou une image intermédiaire générée par un objet, comprenant :
un système d'objectif (9) comportant un axe optique (5) et un plan objet (7) destiné à disposer l'objet (8) ou l'image intermédiaire dont l'image doit être formée, dans lequel le système d'objectif (9) reçoit un faisceau côté objet (11) émis par le plan objet (7) dans une certaine plage d'angle solide et le convertit en un faisceau côté image (13),
un système sélecteur destiné à sélectionner au moins une paire de faisceaux partiels (19, 20) à partir du faisceau côté image (13), et
un dispositif de transmission d'image (51, 52) destiné à générer des représentations des images fournies par l'au moins une paire de faisceaux partiels (19, 20),
ainsi qu'un dispositif d'éclairage avec un coupleur de faisceau (41k) pour la superposition d'une section transversale (225) d'un faisceau d'éclairage (215) avec la section transversale du faisceau côté image (13);
**caractérisé en ce que**
le système sélecteur est conçu pour déplacer une section transversale de faisceau d'au moins l'un des deux faisceaux partiels (19, 20) par rapport à une section transversale de faisceau du faisceau côté image (13),
dans lequel il est prévu une unité de commande (49) pour commander le système sélecteur pour déplacer la section transversale de faisceau de l'au moins un faisceau partiel (19, 20) dans la direction circonférentielle autour de l'axe optique (5),
dans lequel le dispositif d'éclairage peut être commandé de telle manière que la section transversale (225) du faisceau d'éclairage (215) ne chevauche essentiellement pas les sections transversales de faisceau des faisceaux partiels (19k, 20k).

2. Système d'inspection stéréoscopique selon la revendication 1, dans lequel le système sélecteur comprend une source de lumière pulsée (229).

3. Système d'inspection stéréoscopique selon la revendication 2, dans lequel le système sélecteur comprend un réflecteur (225', 225") déplaçable en particulier autour de l'axe optique.

4. Système d'inspection stéréoscopique selon la revendication 1, dans lequel le dispositif de transmission d'image comprend au moins une paire de caméras (45, 46), dans lequel chaque caméra est associée à un faisceau partiel de la paire de faisceaux partiels pour produire une représentation de l'image fournie par ledit faisceau partiel.

5. Système d'inspection stéréoscopique selon la revendication 4, dans lequel il est prévu un système séparateur de faisceau (41) destiné à acheminer le faisceau côté image (13) vers une pluralité de systèmes sélecteurs, dans lequel un dispositif de transmission d'image distinct est associé à chaque système sélecteur.

6. Système d'inspection stéréoscopique selon la revendication 5, dans lequel le système sélecteur présente un écran rotatif (235s, 236s, 235s', 236s') avec une ouverture décentrée (237s, 238s, 237s', 238s').

7. Système d'inspection stéréoscopique selon l'une quelconque des revendications 1 à 6, dans lequel le dispositif d'éclairage comprend un champ constitué d'une multiplicité de miroirs pouvant être connectés de façon sélective (219).

8. Dispositif de formation d'image stéréoscopique destiné à former au moins une paire de représentations d'un objet (8) à visualiser par au moins un utilisateur, comprenant :
- un système détecteur (45, 46) destiné à détecter le rayonnement émis par une région de l'objet dans au moins deux plages d'angle solide (a, -a) et à fournir des données de rayonnement correspondant au rayonnement enregistré,
- un moyen de détection de position (161) destiné à détecter une première position de l'utilisateur par rapport à un point fixe (151) dans un système de coordonnées de l'utilisateur,
- un système sélecteur destiné à déterminer les au moins deux plages d'angle solide (a, -a) en fonction d'un azimut (ϕ) et/ou d'une élévation (θ) de la position de l'utilisateur dans le système de coordonnées de l'utilisateur, et
- un dispositif d'affichage (51, 52) destiné à afficher une première image pour l'oeil gauche de l'utilisateur et à afficher une seconde image pour l'oeil droit de l'utilisateur en fonction des données de rayonnement,
dans lequel le système détecteur et le système sélecteur comprennent le système d'inspection stéréoscopique selon l'une des revendications 1 à 7.
